# EUROPEAN PATENT APPLICATION

(11) **EP 4 177 996 A1**
(43) Date of publication of application: **10.05.2023**
(21) Application number: 21950539.3
(22) Date of filing: 23.07.2021
(51) Int. Cl.: H01M 10/04

(54) **ELECTRODE ASSEMBLY, BATTERY CELL, BATTERY AND ELECTRIC DEVICE**

(71) Applicant: Jiangsu Contemporary Amperex Technology Limited, Liyang, Jiangsu 213300 (CN)
(72) Inventor: ZENG, Yuqun, hangzhou, Jiangsu 213300 (CN); ZHANG, Shengwu, hangzhou, Jiangsu 213300 (CN); TANG, Minghao, hangzhou, Jiangsu 213300 (CN); LIN, Wenfa, hangzhou, Jiangsu 213300 (CN); LIU, Huihui, hangzhou, Jiangsu 213300 (CN); YE, Jie, hangzhou, Jiangsu 213300 (CN)
(74) Representative: Rowlands, Stuart Michael
(86) International application number: PCT/CN2021/108058
(87) International publication number: WO 2023/000290

(57) **Abstract**

The present application provides an electrode assembly, a battery cell, a battery, and a power consuming device. The electrode assembly includes: a cathode electrode plate, an anode electrode plate, and a separator, the separator being configured to isolate the cathode electrode plate from the anode electrode plate; and an electrolyte adsorption layer configured to be arranged along a surface of at least one of the cathode electrode plate, the anode electrode plate and the separator, wherein the electrolyte adsorption layer is provided with ion exchange channels, which are through holes provided in a thickness direction of the electrolyte adsorption layer. According to the technical solution described above, the electrolyte adsorption layer, which is arranged on the surface of at least one of the cathode electrode plate, the anode electrode plate and the separator, can adsorb and retain an electrolyte, which is beneficial to electrolyte storage and release, and ion conduction and diffusion, and improving the cycling performance and prolonging the service life of the battery.

## Description

### Technical Field

The present application relates to the field of batteries, and in particular, to an electrode assembly, a battery cell, a battery, and a power consuming device.

### Background Art

A rechargeable battery, which may be referred to as a secondary battery, refers to a battery that can continue to be used after an active material is activated by means of charging after the battery is discharged. The rechargeable battery is widely used in electronic devices, such as mobile phones, laptops, electric bicycles, electric vehicles, electric airplanes, electric ships, electric toy cars, electric toy ships, electric toy airplanes and electric tools. The rechargeable battery may include a nickel-cadmium battery, a nickel-hydrogen battery, a lithium ion battery, a secondary alkaline zinc-manganese battery, etc.

At present, the batteries most used in vehicles are generally lithium ion batteries. As a rechargeable battery, the lithium ion battery has the advantages of small size, high energy density, high power density, many cycles of use, long storage time, etc.

The rechargeable battery includes an electrode assembly and an electrolyte, the electrode assembly including a cathode electrode plate, an anode electrode plate, and a separator located between the cathode electrode plate and the anode electrode plate. All the cathode electrode plates have a cathode active material layer, for example, the cathode active material of the cathode active material layer may be lithium manganate, lithium cobaltate, lithium iron phosphate or lithium nickel-cobalt manganate; and all the anode electrode plates have an anode active material layer on a surface, for example, the anode active material of the anode active material layer may be graphite or silicon.

The electrode assembly continuously consumes the electrolyte during cycling. After the electrolyte between anode electrode plates is consumed, it cannot be sufficiently supplemented by the electrolyte which is free in a housing in a timely manner, which will lead to the deterioration of the cycle life of a battery cell and a battery caused by the insufficient electrolyte after long-term charge and discharge.

Therefore, how to prolong the cycle life of a battery has become a difficult problem in the industry.

### Summary of the Invention

Various aspects of the present application provide an electrode assembly, a battery cell, a battery, and a power consuming device, which overcome or at least partially solve the problem mentioned above.

A first aspect of the present application provides a battery assembly, including: a cathode electrode plate, an anode electrode plate, a separator, and an electrolyte adsorption layer. The separator is configured to isolate the cathode electrode plate from the anode electrode plate. The electrolyte adsorption layer is configured to be arranged along a surface of at least one of the cathode electrode plate, the anode electrode plate and the separator, wherein The electrolyte adsorption layer is provided with ion exchange channels, which are through holes provided in a thickness direction of the electrolyte adsorption layer. Through the arrangement of the electrolyte adsorption layer on the surface of at least one of the cathode electrode plate, the anode electrode plate and the separator, the electrolyte adsorption layer can be used to retain and slowly release an electrolyte to supplement the electrolyte consumed during cycling, which is beneficial to ion conduction and diffusion, thereby improving the performance of a battery cell. The electrolyte adsorption layer being provided with the ion exchange channels, which are through holes provided in a thickness direction of the electrolyte adsorption layer, which is beneficial to electrolyte release and ion conduction and diffusion, and is beneficial to improving the cycling performance and prolonging the service life of a battery.

In some embodiments, the electrolyte adsorption layer is attached to one surface or two surfaces of the cathode electrode plate, and/or the electrolyte adsorption layer is attached to one surface or two surfaces of the anode electrode plate, and/or the electrolyte adsorption layer is attached to one surface or two surfaces of the separator.

In the embodiments, the attachment of the electrolyte adsorption layer to one surface or two surfaces of the cathode electrode plate, of the anode electrode plate, or of the separator can improve electrolyte storage and retention performances on one side or two sides of the cathode electrode plate, the anode electrode plate, or the separator, to supplement the electrolyte consumed during cycling, which is beneficial to ion conduction and diffusion, thereby improving the performance of the battery cell.

In some embodiments, the cathode electrode plate, the separator, and the anode electrode plate are wound to form a bent region in which at least a part of the electrolyte adsorption layer is arranged on a surface of at least one of the cathode electrode plate, the anode electrode plate and the separator.

In the embodiments, through the arrangement of at least a part of the electrolyte adsorption layer in the bent region of the surface of at least one of the cathode electrode plate, the anode electrode plate and the separator, the electrolyte adsorption layer adsorbed with the electrolyte can fill a gap between the cathode electrode plate and the anode electrode plate in the bent region, and can retain and slowly release the electrolyte in the bent region to supplement the electrolyte consumed during cycling, which is beneficial to ion conduction and diffusion, thereby improving the performance of the battery cell. In addition, through the arrangement of the electrolyte adsorption layer in the bent region(s) of the surface(s) of the cathode electrode plate and/or the anode electrode plate, the electrolyte adsorption layer can further strengthen a cathode active material layer on the cathode electrode plate and/or an anode active material layer on the anode electrode plate, to reduce breakage of the cathode active material layer on the cathode electrode plate and/or the anode active material layer on the anode electrode plate caused by bending, thereby improving the performance of the battery cell.

In some embodiments, at least a part of the electrolyte adsorption layer is arranged on a first bent portion and/or a second bent portion of the cathode electrode plate in the bent region, and/or at least a part of the electrolyte adsorption layer is arranged on a first bent portion and/or a second bent portion of the anode electrode plate, and/or at least a part of the electrolyte adsorption layer is arranged on a bent portion of the separator adjacent to the first bent portion of the cathode electrode plate and/or a bent portion of the separator adjacent to the second bent portion of the cathode electrode plate, and/or at least a part of the electrolyte adsorption layer is arranged on a bent portion of the separator adjacent to the first bent portion of the anode electrode plate and/or a bent portion of the separator adjacent to the second bent portion of the anode electrode plate.

In the embodiments, through the arrangement of at least a part of the electrolyte adsorption layer on the first bent portion and the second bent portion of at least one of the cathode electrode plate, the anode electrode plate and the separator, electrolyte uniformity at the first bent portion and the second bent portion where the gap between the cathode electrode plate and the anode electrode plate is relatively large can be improved, the influence on the energy density of the battery cell is reduced, and the performance of the battery cell is improved. In addition, through the arrangement of the electrolyte adsorption layer on the first bent portion and the second bent portion in the bent region(s) of the surface(s) of the cathode electrode plate and/or the anode electrode plate, the electrolyte adsorption layer can further strengthen the cathode active material layer on the first bent portion and the second bent portion of the cathode electrode plate and/or the anode active material layer on the first bent portion and the second bent portion of the anode electrode plate, to reduce breakage of the active material layer(s) caused by bending, thereby improving the performance of the battery cell.

In some embodiments, the bent region includes a first bent subregion covering a midline of the bent region and a second bent subregion located on at least one side of the first bent subregion, and the midline of the bent region is parallel to a winding axis of the electrode assembly; a part of the electrolyte adsorption layer in the first bent subregion has a porosity different from that of a part of the electrolyte adsorption layer in the second bent subregion, wherein the porosity of the electrolyte adsorption layer is a ratio of an area of the ion exchange channels to an area of the electrolyte adsorption layer.

In the embodiments, through the adjustment of the porosities of the surfaces of the supporting layer in the first bent subregion and the second bent subregion, electrolyte release and ion conduction and diffusion performances of the first bent subregion and the second bent subregion are adjusted, which is beneficial to improving the cycling performance and prolonging the service life of the battery.

In some embodiments, in the bent region, and in a direction parallel to the winding axis of the electrode assembly, the ion exchange channels are distributed along a broken line or a curve in the electrolyte adsorption layer.

In the embodiments, the ion exchange channels are arranged along a broken line or a curve in the electrolyte adsorption layer, so that the ion exchange channels are distributed at different widths and heights of the electrolyte adsorption layer, and the electrolyte adsorption layer can implement electrolyte release and ion conduction and diffusion at different heights and widths, which is beneficial to improving the cycling performance and prolonging the service life of the battery.

In some embodiments, the electrolyte adsorption layer includes an adsorption substrate, one side of the adsorption substrate is attached to the corresponding cathode electrode plate, anode electrode plate or separator, and the adsorption substrate is provided with the ion exchange channels.

In the embodiments, the adsorption substrate is used to store and retain the electrolyte on the surface of the cathode electrode plate, the anode electrode plate or the separator, to supplement the electrolyte consumed during cycling, which is beneficial to ion conduction and diffusion, thereby improving the performance of the battery cell. The adsorption substrate is provided with the ion exchange channels arranged in its own thickness direction, which is beneficial to electrolyte release and ion conduction and diffusion, and is beneficial to improving the cycling performance and prolonging the service life of the battery.

In the embodiments, the adsorption substrate is of a material including one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A epoxy resin, ethylene-vinyl acetate copolymer bisphenol F epoxy resin, glycidyl ether type epoxy resin, glycidyl ester type epoxy resin, silicone resin, polyurethane, a styrene-isoprene-styrene copolymer, and modifications thereof.

In some embodiments, the electrolyte adsorption layer includes an adsorption substrate and a supporting layer, wherein one side of the adsorption substrate is attached to the corresponding cathode electrode plate, anode electrode plate or separator, and the supporting layer is attached to the other side of the adsorption substrate. The ion exchange channels penetrate the supporting layer and the adsorption substrate in the thickness direction.

In the embodiments, the electrolyte adsorption layer includes the adsorption substrate and the supporting layer. The adsorption substrate has a certain fluidity, and is likely to move and deform on the surface of the cathode electrode plate, the anode electrode plate or the separator, thereby affecting distribution uniformity of the electrolyte adsorption layer. The supporting layer is arranged on a side opposite to the side of the adsorption substrate attached to the cathode electrode plate, the anode electrode plate, or the separator. The supporting layer can restrain flow and deformation of the adsorption substrate while enabling the ions to flow, and uniformly retain the adsorption substrate on the surface of the cathode electrode plate, the anode electrode plate or the separator, so that the electrolyte can be stably retained on the surface of the cathode electrode plate, the anode electrode plate or the separator for a long time, which is beneficial to improving the cycling performance and prolonging the service life of the battery. The ion exchange channels penetrating the supporting layer and the adsorption substrate enables the ion exchange channels to run through the supporting layer and the adsorption substrate, which is beneficial to electrolyte release and ion conduction and diffusion, and is beneficial to improving the cycling performance and prolonging the service life of the battery.

In some embodiments, the adsorption substrate is of a material including one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A epoxy resin, ethylene-vinyl acetate copolymer bisphenol F epoxy resin, glycidyl ether type epoxy resin, glycidyl ester type epoxy resin, silicone resin, polyurethane, a styrene-isoprene-styrene copolymer, and modifications thereof.

In some embodiments, the supporting layer is of a material including one of polyvinyl chloride, polyethylene, polypropylene, polyvinylidene fluoride, a hexafluoropropylene-vinylidene fluoride copolymer, a tetrafluoropropylene-vinylidene fluoride copolymer, a chlorotrifluoropropylene-vinylidene fluoride copolymer, polyethylene glycol terephthalate, polyimide, polyetherimide, polycarbonate, polystyrene, polyphenylene sulfide, polyvinylidene fluoride or a copolymer of the polyvinylidene fluoride, polyarylate, a fiber, nylon, a nonwoven, and modifications thereof.

In some embodiments, the supporting layer has a thickness of ≤ 50 um, 0 < a porosity of the supporting layer ≤ 50%, and/or the supporting layer has a tensile modulus of ≤ 100 MPa, wherein the porosity of the supporting layer is a ratio of a total area of the ion exchange channels to an area of the supporting layer.

In the embodiments, the setting of the thickness of the supporting layer to ≤ 50 µM can control the gap between the cathode electrode plate and the anode electrode plate within a reasonable range, which is beneficial to ion transport. The setting of the porosity of the supporting layer to 0 < the porosity of the supporting layer ≤ 50% can better restrain flow and deformation of the adsorption substrate while enabling the ions to flow, and uniformly retain the adsorption substrate on the surface of the cathode electrode plate, the anode electrode plate or the separator, so that the electrolyte can be stably retained on the surface of the cathode electrode plate, the anode electrode plate or the separator for a long time, which is beneficial to improving the cycling performance and prolonging the service life of the battery. The tensile modulus of the supporting layer ≤ 100 MPa enables the supporting layer to have a better retention performance for the adsorption substrate.

A second aspect of the present application provides a battery cell, including: a housing, an electrolyte, a cover plate, and at least one electrode assembly according to the foregoing embodiments, wherein the housing has an accommodating cavity and an opening, and the electrode assembly and the electrolyte are accommodated in the accommodating cavity; and the cover plate is configured to close the opening of the housing.

A third aspect of the present application provides a battery, including a case, and at least one battery cell according to the foregoing embodiment, the battery cell being received in the case.

A fourth aspect of the present application provides a power consuming device configured to receive power provided by the battery according to the foregoing embodiment.

The aforementioned description is only an overview of the technical solutions of the embodiments of the present application. In order to more clearly understand the technical means of the embodiments of the present application to implement the technical means according to the content of the description, and in order to make the foregoing and other objectives, features and advantages of the embodiments of the present application more obvious and understandable, specific implementations of the present application are exemplarily described below.

### Brief Description of the Drawings

In order to more clearly illustrate the technical solutions in the embodiments of the present application, the drawings to be used in the description of the embodiments of the present application will be described briefly below. Obviously, the drawings in the following description are merely some embodiments of the present application. For those of ordinary skill in the art, other drawings can also be obtained according to these drawings without the inventive labor.
Fig. 1 is a schematic perspective structural diagram of an electrode assembly according to an embodiment of the present application;
Fig. 2 is a schematic structural diagram of the electrode assembly of Fig. 1 along a cross-section perpendicular to a winding axis K;
Fig. 3 is a schematic structural diagram of a cross-section of a flat-shaped electrode assembly perpendicular to a winding axis K according to another embodiment of the present application;
Fig. 4 is a schematic structural diagram of a cross-section of another flat-shaped electrode assembly perpendicular to a winding axis K according to another embodiment of the present application;
Fig. 5 is a schematic structural diagram of a cross-section of another flat-shaped electrode assembly perpendicular to a winding axis K according to another embodiment of the present application;
Fig. 6 is a schematic structural diagram of a cross-section of another flat-shaped electrode assembly perpendicular to a winding axis K according to another embodiment of the present application;
Fig. 7 is a schematic structural diagram of a cross-section of another flat-shaped electrode assembly perpendicular to a winding axis K according to another embodiment of the present application;
Fig. 8 is a schematic structural diagram of a cross-section of another flat-shaped electrode assembly perpendicular to a winding axis K according to another embodiment of the present application;
Fig. 9 is a schematic structural diagram of an anode electrode plate according to another embodiment of the present application;
Fig. 10 is a schematic structural diagram of a cathode electrode plate according to another embodiment of the present application;
Fig. 11 is a schematic structural diagram of a cross-section taken along a direction A-A in Fig. 10;
Fig. 12 is a schematic structural diagram of a cross-section taken along a direction B-B in Fig. 10;
Fig. 13 is a schematic structural diagram of a cross-section taken along the direction B-B in Fig. 10 according to another embodiment of the present application;
Fig. 14 is a schematic structural diagram of a cross-section taken along the direction B-B in Fig. 10 according to another embodiment of the present application;
Fig. 15 is a schematic structural diagram of a cross-section taken along the direction B-B in Fig. 10 according to another embodiment of the present application;
Fig. 16 is a schematic partial structural diagram of an electrode assembly in its bent region according to an embodiment of the present application;
Fig. 17 is a schematic structural diagram of a cross-section of a flat-shaped electrode assembly perpendicular to a winding axis K according to another embodiment of the present application;
Fig. 18 is a schematic structural diagram of a cathode electrode plate according to another embodiment of the present application;
Fig. 19 is a schematic structural diagram of a cross-section of another flat-shaped electrode assembly perpendicular to a winding axis K according to another embodiment of the present application;
Fig. 20 is a schematic structural diagram of a cross-section of another flat-shaped electrode assembly perpendicular to a winding axis K according to another embodiment of the present application;
Fig. 21 is a schematic structural diagram of a cross-section of another flat-shaped electrode assembly perpendicular to a winding axis K according to another embodiment of the present application;
Fig. 22 is a schematic structural diagram of a cross-section of another flat-shaped electrode assembly perpendicular to a winding axis K according to another embodiment of the present application;
Fig. 23 is a schematic structural diagram of a cross-section of another flat-shaped electrode assembly perpendicular to a winding axis K according to another embodiment of the present application;
Fig. 24 is a schematic structural diagram of a cross-section of another flat-shaped electrode assembly perpendicular to a winding axis K according to another embodiment of the present application;
Fig. 25 is a schematic structural diagram of a cross-section of another flat-shaped electrode assembly perpendicular to a winding axis K according to another embodiment of the present application;
Fig. 26 is a schematic structural diagram of a cross-section of another flat-shaped electrode assembly perpendicular to a winding axis K according to another embodiment of the present application;
Fig. 27 is a schematic structural diagram of a cathode electrode plate according to another embodiment of the present application;
Fig. 28 is a schematic structural diagram of a cathode electrode plate according to another embodiment of the present application;
Fig. 29 is a schematic structural diagram of a cathode electrode plate according to another embodiment of the present application;
Fig. 30 is a schematic structural diagram of a battery cell according to another embodiment of the present application;
Fig. 31 is a schematic structural diagram of a battery module according to another embodiment of the present application;
Fig. 32 is a schematic structural diagram of a battery according to another embodiment of the present application; and
Fig. 33 is a schematic structural diagram of a power consuming device according to another embodiment of the present application.

### Detailed Description of Embodiments

In order to make the objectives, technical solutions and advantages of embodiments of the present application clearer, the technical solutions in the embodiments of the present application will be described clearly and completely below in conjunction with the accompanying drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technological and scientific terms used herein have the same meanings as those commonly understood by those skilled in the art to which the present application belongs. The terms used in the description of the present application herein are merely for the purpose of describing specific embodiments, but are not intended to limit the present application. The terms "including" and "having" and any variations thereof in the description and the claims of the present application as well as the foregoing description of the accompanying drawings are intended to cover non-exclusive inclusions. The phrase "embodiment" mentioned herein means that the specific features, structures and characteristics described in conjunction with the embodiment may be included in at least one of the embodiments of the present application. The phrase at various locations in the description does not necessarily refer to the same embodiment, or an independent or alternative embodiment exclusive of another embodiment. Those skilled in the art understand explicitly or implicitly that an embodiment described herein may be combined with another embodiment.

The term "and/or" herein is merely a description of the associated relationship of associated objects, and indicates that three relationships may exist. For example, A and/or B may indicate that the three instances: A exists alone, A and B coexist, or B exists alone. In addition, the character "/" herein generally indicates an "or" relationship between the associated objects.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application. In addition, the terms "first", "second" and the like in the description and the claims of the present application or in the foregoing accompanying drawings are used to distinguish between different objects, rather than to describe a specific order. Therefore, a feature defined by "first" or "second" may explicitly or implicitly include one or more features. In the description of the present application, the term "a plurality of" means two or more, unless otherwise specified.

In the description of the present application, it should be noted that unless otherwise explicitly specified and defined, the terms "mounting", "connecting" and "connection" should be understood in a broad sense, for example, they may be a fixed connection, a detachable connection, or an integrated connection; or may be a mechanical connection or an electrical connection; or may be a direct connection, an indirect connection by means of an intermediate medium, or internal communication between two elements. For those of ordinary skill in the art, the specific meanings of the terms mentioned above in the present application can be construed according to specific circumstances.

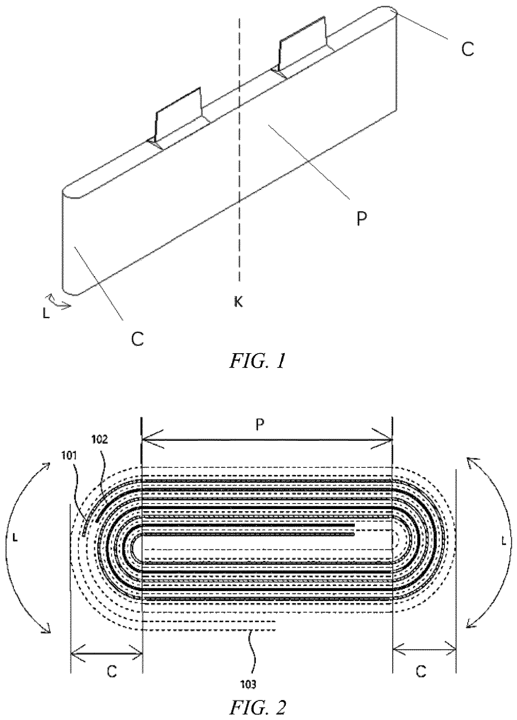

In order to make a lithium ion battery smaller in size and higher in energy density, a cathode electrode plate, an anode electrode plate, and a separator in an electrode assembly of a lithium ion battery may be wound and then compacted. For example, Fig. 1 shows a schematic perspective structural diagram of an electrode assembly. The electrode assembly includes an anode electrode plate, a cathode electrode plate, and a separator, wherein the anode electrode plate, the cathode electrode plate, and the separator are stacked and then wound around a winding axis K to form a wound structure. The separator is an insulating film, and is used to isolate the anode electrode plate from the cathode electrode plate and prevent the anode electrode plate and the cathode electrode plate from being short-circuited. The wound structure of the electrode assembly has a flat shape, and a schematic structural diagram of the electrode assembly along a cross-section perpendicular to the winding axis K may be as shown in Fig. 2.

With reference to Figs. 1 and 2, the electrode assembly includes a straight region P and bent regions C located at two ends of the straight region P. The straight region P is a region with a parallel structure in the wound structure, that is, the anode electrode plate 101, the cathode electrode plate 102 and the separator 103 in the straight region P are substantially parallel to one another, that is, each layer of the anode electrode plate 101, the cathode electrode plate 102 and the separator 103 of the electrode assembly in the straight region P has a surface which is flat. The bent region C is a region with a bent structure in the wound structure, that is, the anode electrode plate 101, the cathode electrode plate 102 and the separator 103 in the bent region C are all bent, that is, each of the anode electrode plate 101, the cathode electrode plate 102 and the separator 103 of the electrode assembly in the bent region C has a surface which is curved. The bent region C has a winding direction L. The winding direction L may be understood as a direction pointing to the straight region along the surface of the electrode assembly in the bent region C. For example, the winding direction L is a winding direction of the wound structure in the bent region C.

The surface of the anode electrode plate 101 has an anode active material layer made of an anode active material, and the surface of the cathode electrode plate 102 has a cathode active material layer made of a cathode active material. For example, the cathode active material may be lithium manganate, lithium cobaltate, lithium-iron phosphate or lithium nickel-cobalt manganate, and the anode active material may be graphite or silicon.

The inventors have found during the research and development that the electrode assembly continuously consumes the electrolyte during cycling. After the electrolyte between the anode electrode plate and the cathode electrode plate is consumed, it cannot be sufficiently supplemented with the electrolyte which is free in a housing in a timely manner, which will lead to the premature deterioration of the cycle life of a battery cell and a battery pack caused by the insufficient electrolyte after long-term charge and discharge.

In view of this, the present application is intended to provide an electrode assembly, which includes a cathode electrode plate, an anode electrode plate, and a separator, wherein the separator is configured to isolate the cathode electrode plate from the anode electrode plate; after being stacked, the cathode electrode plate, the anode electrode plate and the separator may form a wound structure around a winding axis, for example, a flat wound structure; and the cathode electrode plate, the anode electrode plate and the separator may also be continuously folded in a Z shape after being stacked. The electrode assembly may be formed by winding, or may be formed by continuously folding in a Z shape. The electrode assembly further includes an electrolyte adsorption layer configured to be arranged along a surface of at least one of the cathode electrode plate, the anode electrode plate and the separator; and the electrolyte adsorption layer is provided with ion exchange channels, which are through holes provided in a thickness direction of the electrolyte adsorption layer.

Through the arrangement of the electrolyte adsorption layer on the surface of at least one of the cathode electrode plate, the anode electrode plate and the separator, the electrolyte adsorption layer can fill a gap between the cathode electrode plate and the anode electrode plate, and retain and slowly release an electrolyte to supplement the electrolyte consumed during cycling, which is beneficial to ion conduction and diffusion, thereby improving the performance of the battery cell. The electrolyte adsorption layer is provided with the ion exchange channels arranged in its own thickness direction, which is beneficial to electrolyte release and ion conduction and diffusion, and is beneficial to improving the cycling performance and prolonging the service life of the battery cell. The ion exchange channels may be through holes provided in the thickness direction of the electrolyte adsorption layer. The through holes may be uniformly distributed or nonuniformly distributed in the surface of the electrolyte adsorption layer. The through holes may have the same or different cross-sectional areas and/or hole depths, and there may be one or more through holes. The electrolyte is accommodated in the ion exchange channels, and ions can pass through the electrolyte adsorption layer through the ion exchange channels. The separator 103 has an electrical insulation property and is configured to isolate the cathode electrode plate 102 and the anode electrode plate 101 adjacent to each other, and prevent the adjacent cathode electrode plate 102 and the anode electrode plate 101 adjacent to each other from being short-circuited. The separator 103 is provided with a large number of through micropores, which can allow the electrolyte and ions to freely pass through, and has good permeability for lithium ions. Therefore, the separator 103 substantially cannot prevent the passage of the lithium ions. For example, the separator 103 includes a separator substrate and a functional layer located on a surface of the separator substrate. The separator substrate includes at least one of polypropylene, polyethylene, an ethylene-propylene copolymer, polybutylene terephthalate, etc. The functional layer may be a mixture layer of a ceramic oxide and a binder.

In the electrode assembly according to an embodiment of the present application, an electrolyte adsorption layer is attached to one surface or two surfaces of a cathode electrode plate 1, and/or an electrolyte adsorption layer 4 is attached to one surface or two surfaces of an anode electrode plate 2, and/or an electrolyte adsorption layer 4 is attached to one surface or two surfaces of a separator 3.

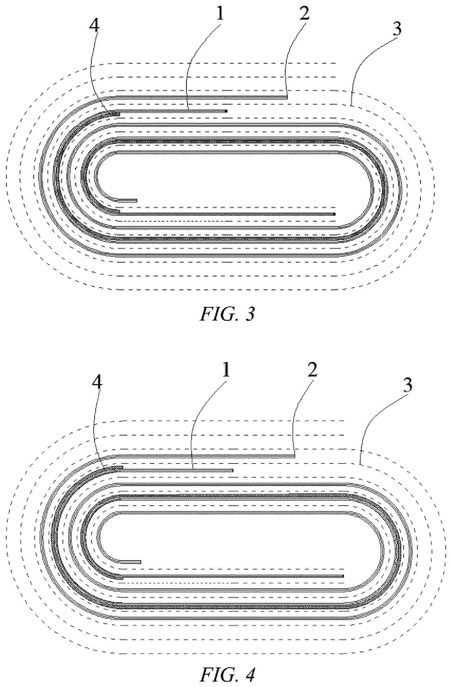

As shown in Fig. 3, in another embodiment of the present application, an electrolyte adsorption layer 4 is attached to an inner surface of the cathode electrode plate 1.

As shown in Fig. 4, in another embodiment of the present application, an electrolyte adsorption layer 4 is attached to an outer surface of the cathode electrode plate 1.

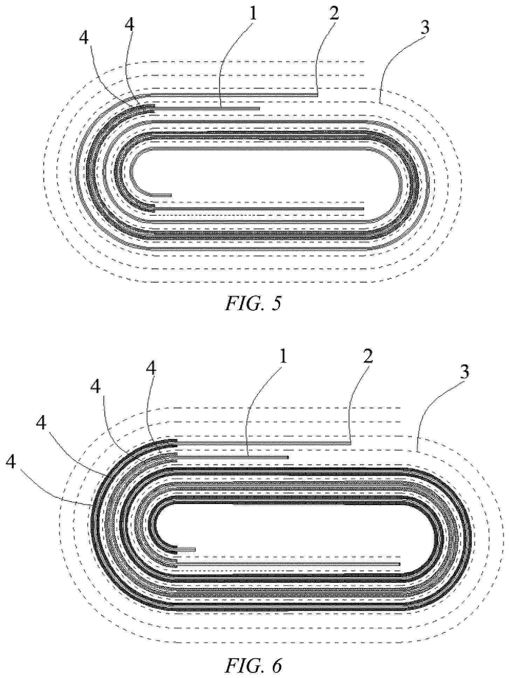

As shown in Fig. 5, in another embodiment of the present application, electrolyte adsorption layers 4 are attached to an inner surface and an outer surface of the cathode electrode plate 1.

In some embodiments not shown in the figures, an electrolyte adsorption layer(s) may also be attached to an inner surface and/or an outer surface of the anode electrode plate 2. For the mode in which the electrolyte adsorption layer is arranged, reference can be made to the mode in which the electrolyte adsorption layer is arranged on the surface of the cathode electrode plate 1 in Figs. 3-5.

As shown in Fig. 6, in another embodiment of the present application, electrolyte adsorption layers 4 are attached to an inner surface and an outer surface of the cathode electrode plate 1 and an inner surface and an outer surface of the anode electrode plate 2. The electrolyte adsorption layer 4 is attached to one surface or two surfaces of the cathode electrode plate 1, and/or attached to one surface or two surfaces of the anode electrode plate 2, or the electrolyte adsorption layer 4 may be attached to any surface of the cathode electrode plate 1 and the anode electrode plate 2, and/or attached to one surface or two surfaces of the separator 3. "Attaching" means adhesion, coating or spraying. Through attachment, position movement of the electrolyte adsorption layer 4 during the use of the battery cell can be reduced.

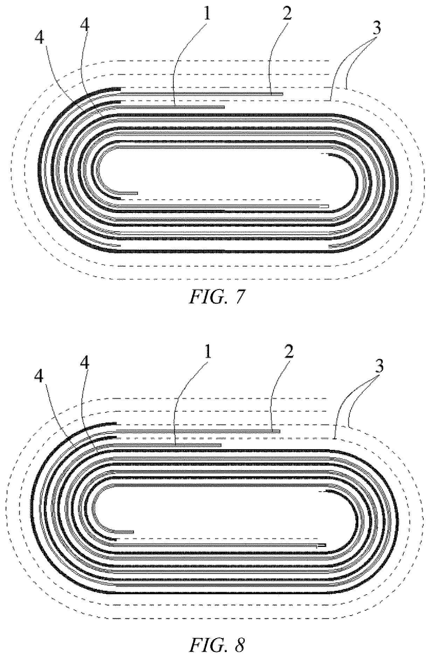

As shown in Fig. 7, in another embodiment of the present application, an electrolyte adsorption layer 4 may be attached to an inner surface of the separator 3.

As shown in Fig. 8, in another embodiment of the present application, an electrolyte adsorption layer 4 may be attached to an outer surface of the separator 3.

In some embodiments, not shown in the figures, electrolyte adsorption layers 4 may also be attached to an inner surface and an outer surface of the separator 3. For the mode in which the electrolyte adsorption layer 4 is attached to the separator 3, reference can be made to the mode in which the electrolyte adsorption layer(s) 4 is/are arranged on the surface(s) of the cathode electrode plate 1 and/or the anode electrode plate 2 in Figs. 3-6.

The electrolyte adsorption layer 4 is arranged on the surface of the separator 3, can also fill the gap between the cathode electrode plate and the anode electrode plate, and retain and store the electrolyte to supplement the electrolyte consumed during cycling, which is beneficial to ion conduction and diffusion, thereby improving the cycling performance and prolonging the service life of the battery cell. The electrolyte adsorption layer 4 is provided with the ion exchange channels arranged in the thickness direction of the electrolyte adsorption layer, which is beneficial to electrolyte release and ion conduction and diffusion, and is beneficial to improving the cycling performance and prolonging the service life of the battery cell.

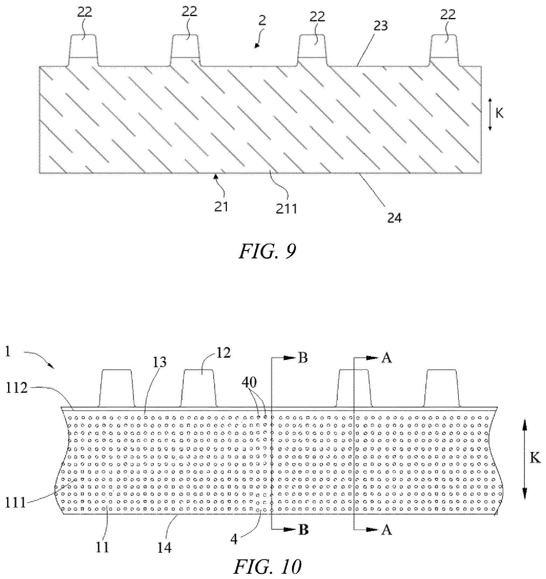

The structure of the anode electrode plate 2 may be shown in Fig. 9, which is a schematic structural diagram of an anode electrode plate according to another embodiment of the present application. The anode electrode plate 2 includes an anode main body portion 21 and an anode tab portion 22 extending outwardly from the anode main body portion 21 along a winding axis K. At least a partial region of a surface of the anode main body portion 21 along the winding axis K is an anode active material layer 211, and the anode active material layer 211 is configured to be coated with an anode active material, which may be graphite or silicon.

In another embodiment of the present application, the anode active material layer 211 is provided in a partial region of the surface of the anode main body portion 21, and the anode active material layer 211 is also provided on the surface of the anode tab portion 22 and close to a root region of the anode main body portion 21, that is, a partial region of the anode tab portion 22 is the anode active material layer 211.

In another embodiment of the present application, as shown in Fig. 9, the anode active material layer 211 covers the entire surface of the anode main body portion 21 along the winding axis K.

In another embodiment of the present application, a cathode active material may not cover the entire surface of the cathode electrode plate 1, for example, as shwon in Fig. 10, which is a schematic structural diagram of a cathode electrode plate according to another embodiment of the present application.

The cathode electrode plate 1 includes a cathode main body portion 11 and at least one cathode tab portion 12 extending to the outside of the cathode main body portion 11 along the winding axis K. At least a partial region of the surface of the cathode main body portion 11 is a cathode active material layer 111. The cathode active material layer 111 may be coated with a cathode active material. For example, the cathode active material may be a ternary material, lithium manganate or lithium iron phosphate.

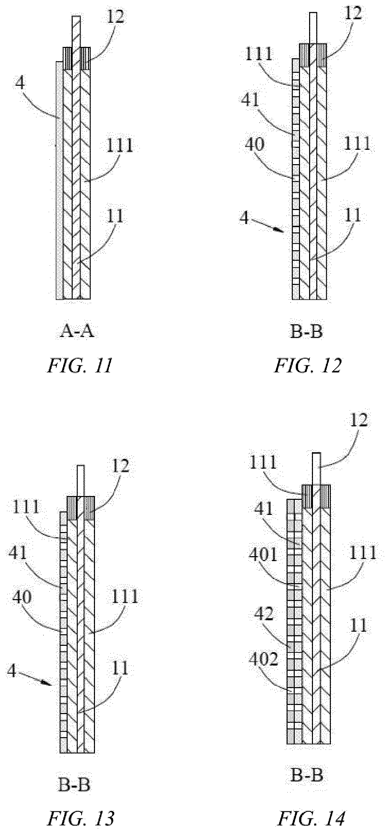

In another embodiment of the present application, the surface of the cathode main body portion 11 further includes a first insulation layer coating region 112 adjacent to the cathode active material layer 111, and the first insulation layer coating region 112 is located on the side of the cathode active material layer 111 adjacent to the cathode tab portion 12. The first insulation layer coating region 112 is configured to be coated with an insulating substance, which is used to insulate and isolate the cathode active material layer 111 from the cathode tab portion 12. For example, as shown in Fig. 11, which is a schematic structural diagram of a cross-section taken along a direction A-A in Fig. 10, two surfaces of a current collector of the cathode electrode plate 1 are provided with cathode active material layers 111, and the cathode tab portion 12 is a part of the current collector of the cathode electrode plate 1, wherein the current collector may be made of aluminium. For example, the cathode active material layer 111 and the first insulation layer coating region 112 are distributed on the surface of the cathode main body portion 11 at two ends in a width direction (i.e., the winding axis K) of the cathode main body portion 11, and the cathode tab portion 12 and the first insulation layer coating region 112 are at the same end of the cathode main body portion 11.

In another embodiment of the present application, the cathode active material layer 111 and the first insulation layer coating region 112 are two substantially parallel regions on the surface of the cathode main body portion 11, and are distributed in two layers on the surface of the cathode main body portion 11 along the winding axis K.

In another embodiment of the present application, the first insulation layer coating region 112 may be located at a portion where the cathode main body portion 11 is interconnected to the cathode tab portion 12, for example, the portion of the first insulation layer coating region 112 located on the surface of the cathode main body portion 11 and interconnected to the cathode tab portion 12, for separating the surface of the cathode tab portion 12 from the cathode active material layer 111. In another embodiment of the present application, the first insulation layer coating region 112 is provided on the surface of the cathode main body portion 11, a second insulation layer coating region is also provided in a root region of the cathode tab portion 12 close to the cathode main body portion 11, and the second insulation layer coating region is configured to be coated with an insulating substance.

In another embodiment of the present application, the surface of the first insulation layer coating region 112 is coated with an insulating substance which includes an inorganic filler and a binder. The inorganic filler includes one or more of boehmite, aluminium oxide, magnesium oxide, titanium oxide, zirconium oxide, silicon dioxide, silicon carbide, boron carbide, calcium carbonate, aluminium silicate, calcium silicate, potassium titanate, and barium sulfate. The binder includes one or more of polyvinylidene fluoride, polyacrylonitrile, polyacrylic acid, polyacrylate, polyacrylic acid-acrylate, polyacrylonitrile-acrylic acid, and polyacrylonitrile-acrylate.

In another embodiment of the present application, each cathode electrode plate 1 may include one, two or more cathode tab portions 12, and when the cathode electrode plate 1 includes two or more cathode tab portions 12, all the cathode tab portions 12 are located on the same side of the cathode electrode plate 1 along the winding axis K.

With reference to Figs. 9 and 10, when the cathode electrode plate 1 and the anode electrode plate 2 are stacked on each other, two ends of the anode active material layer 211 of the anode electrode plate 2 along the winding axis K both extend beyond the corresponding ends of the cathode active material layer 111 of an adjacent cathode electrode plate 1, so that the electrode assembly can have a better energy density. For example, the two ends of the anode active material layer 211 along the winding axis K are respectively a first end 23 and a second end 24, and the two ends of the cathode active material layer 111 along the winding axis K are respectively a third end 13 and a fourth end 14. The first end 23 of the anode active material layer 211 and the third end 13 of the cathode active material layer 111 are located on the same side of the electrode assembly along the winding axis K, the first end 23 of the anode active material layer 211 extends beyond the third end 13 of the cathode active material layer 111 along the winding axis K, the second end 24 of the anode active material layer 211 and the fourth end 14 of the cathode active material layer 111 are located on the other side of the electrode assembly along the winding axis K, and the second end 24 of the anode active material layer 211 is extends the fourth end 14 of the cathode active material layer 111 along the winding axis K.

The two ends of the anode active material layer 211 along the winding axis K may extend beyond the corresponding ends of the cathode active material layer 111 by the same or different sizes, for example, by the size ranging from 0.2 millimeters to 5 millimeters.

Fig. 12 is a schematic structural diagram of a cross-section taken along a direction B-B in Fig. 10. With reference to Fig. 10, an electrolyte adsorption layer 4 is attached to a surface of a cathode active material layer 111, i.e., the surface of the cathode active material layer. Through the arrangement of the electrolyte adsorption layer 4 on the surface of at least one of the cathode electrode plate 1, the anode electrode plate 2 and the separator 3, the electrolyte adsorption layer 4 adsorbed with the electrolyte can fill a gap between the cathode electrode plate 1 and the anode electrode plate 2, and can retain and slowly release an electrolyte to supplement the electrolyte consumed during cycling, which is beneficial to ion conduction and diffusion, thereby improving the cycling performance and prolonging the service life of the battery cell. The electrolyte adsorption layer 4 is provided with the ion exchange channels 40 arranged in the thickness direction of the electrolyte adsorption layer, which is beneficial to electrolyte release and ion conduction and diffusion, and is beneficial to improving the cycling performance and prolonging the service life of the battery cell.

In some embodiments, the electrolyte adsorption layer 4 may be made of any material suitable for adsorbing and retaining the electrolyte and resistant to corrosion by the electrolyte.

As shown in Fig. 12, in some embodiments, the electrolyte adsorption layer 4 may include an adsorption substrate 41, one side of the adsorption substrate 41 is attached to the corresponding cathode electrode plate or anode electrode plate, and the adsorption substrate 41 is provided with the ion exchange channels 40.

The adsorption substrate 41 is of a material including at least one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A epoxy resin, ethylene-vinyl acetate copolymer bisphenol F epoxy resin, glycidyl ether type epoxy resin, glycidyl ester type epoxy resin, silicone resin, polyurethane, a styrene-isoprene-styrene copolymer, and modifications thereof.

As shown in Figs. 10 and 12, one or more ion exchange channels 40 may be provided in the adsorption substrate 41. For example, the ion exchange channels 40 may be arranged in an array in the adsorption substrate 41, and the ion exchange channels 40 have the same diameter. The ion exchange channels 40 may be provided in the adsorption substrate 41 in the thickness direction of the adsorption substrate 41. The ion exchange channels 40 may be through holes or blind holes, and a space in each ion exchange channel can store more electrolyte, improving the electrolyte release performance and the ion conduction and diffusion performance of the adsorption substrate 41. However, it is not limited to this. The ion exchange channels 40 may also be nonuniformly provided in the adsorption substrate 41, and/or the ion exchange channels 40 may have different diameters and/or depths. The ion exchange channels 40 may penetrate the adsorption substrate 41 and come into direct contact with the cathode active material layer or the anode active material layer, which is beneficial to enabling ions to escape from the cathode active material layer with the electrolyte in the ion exchange channels 40 and be embedded into the anode active material layer, so as to improve ion permeability. In addition, more electrolyte can also be stored in the ion exchange channels 40 to improve the electrolyte release performance and the ion conduction and diffusion performance. Through the adjustment of the arrangement mode and diameters of the ion exchange channels 40, the release performance and the ion conduction and diffusion performance of the adsorption substrate 41 can be adjusted.

To provide better electrolyte storage and retention performances of and reduce costs, the electrolyte adsorption layer 4 includes a fifth end (upper end) and a sixth end (lower end) in a direction perpendicular to a winding direction L (i.e., the winding axis K). The fifth end of the electrolyte adsorption layer 4 extends beyond the cathode active material layer of the cathode electrode plate 1 and/or the sixth end of the electrolyte adsorption layer 4 extends beyond the cathode active material layer. That is, the fifth end of the electrolyte adsorption layer 4 extends beyond the third end (upper end) of the cathode active material layer 111 along the winding axis K, and/or the sixth end of the electrolyte adsorption layer 4 extends beyond the fourth end (lower end) of the cathode active material layer 111 along the winding axis K, for example, by the size ranging from 0.2 millimeters to 5 millimeters. In this way, the electrolyte can be kept on the cathode active material layer as much as possible, so that the electrolyte is slowly released on the surface of the cathode active material layer, thereby enhancing the cycling performance and prolonging the service life of the battery cell.

In some embodiments, when an electrolyte adsorption layer 4 is composed of an adsorption substrate 41, a porosity of the electrolyte adsorption layer 4 is a porosity of the adsorption substrate 41, and the porosity of the adsorption substrate meets 0 < the porosity of the adsorption substrate ≤ 50%. For example, the porosity of the adsorption substrate may be 0.05%, 0.08%, 0.1%, 0.5%, 1%, 2%, 5%, 10%, 15%, 30%, 40%, etc. Through the adjustment of the porosity of the adsorption substrate, the release performance and the ion conduction and diffusion performance of the adsorption substrate 41 can be adjusted.

In another embodiment of the present application, Fig. 13 is a schematic structural diagram of a cross-section taken along the direction B-B in Fig. 10. The embodiment of Fig. 13 differs from the embodiment shown in Fig. 12 in that electrolyte adsorption layers 4 are arranged on surfaces of the cathode active material layers 111 on two surfaces of the cathode electrode plate 1. The specific structure, attachment mode and position of the electrolyte adsorption layer 4 are the same as those in Fig. 12. In some embodiments not shown in the figures, the electrolyte adsorption layer 4 may also be attached to one or two surfaces of the anode electrode plate 2 or the separator 3. The specific structure, attachment mode and position of the electrolyte adsorption layer 4 are the same as the attachment mode of the electrolyte adsorption layer on the cathode electrode plate 1. For details, references can be made to the structure of Fig. 12 or 13.

Fig. 14 is a schematic structural diagram of a cathode electrode plate according to another embodiment of the present application.

In this embodiment, the structure of the cathode electrode plate 1 is the same as that in Fig. 13. The electrolyte adsorption layer 4 of this embodiment includes an adsorption substrate 41 and a supporting layer 42, wherein the supporting layer 42 is attached to the other side of the adsorption substrate 41. The other side is a side opposite to the side of the adsorption substrate 41 attached to the electrode plate. As shown in Fig. 14, the other side of the adsorption substrate 41 is attached to the cathode electrode plate 1, and the ion exchange channels may penetrate the supporting layer and the adsorption substrate in the thickness direction.

In some embodiments, the ion exchange channels 40 penetrate the supporting layer 42 and the adsorption substrate 41, as shown in Fig. 14. Specifically, the adsorption substrate 41 is provided with first ion exchange channels 401, the supporting layer is provided with second ion exchange channels 402, and the first ion exchange channels 401 are in communication with the second ion exchange channels 402 to form the ion exchange channels 40. Since the adsorption substrate 41 has a certain fluidity, and is likely to move and deform on the surface of the electrode plate, thereby affecting distribution uniformity of the electrolyte adsorption layer 41, the supporting layer 42 is arranged on a side opposite to the side of the adsorption substrate 41 attached to the cathode electrode plate 1, the anode electrode plate 2, or the separator 3. The supporting layer 42 can restrain flow and deformation of the adsorption substrate 41 while enabling the ions to flow, and uniformly retain the adsorption substrate 41 on the surface of the electrode plate, so that the electrolyte is uniformly distributed. The ion exchange channels 40 penetrating the supporting layer and the adsorption substrate enables the ion exchange channels 40 to run through the supporting layer 42 and the adsorption substrate 41, which is beneficial to electrolyte release and ion conduction and diffusion, and is beneficial to improving the cycling performance and prolonging the service life of the battery.

In some embodiments, one or more second ion exchange channels 402 may be provided in the supporting layer 42. For example, the second ion exchange channels 402 may be arranged in an array in the supporting layer 42, and the second ion exchange channels 402 have the same diameter. The second ion exchange channels 402 may be provided in the supporting layer 42 in the thickness direction of the supporting layer 42. The second ion exchange channels 402 may be through holes, and a space in each second ion exchange channel 402 can store more electrolyte and improve the electrolyte release performance, improving electrolyte release and ion conduction and diffusion performances of the supporting layer 42. However, it is not limited to this. The second ion exchange channels 402 may also be nonuniformly provided in the supporting layer 42, and/or the second ion exchange channels 402 may have different diameters.

In some embodiments, one or more first ion exchange channels 401 may be provided in the adsorption substrate 41. For example, the first ion exchange channels 401 may be arranged in an array in the adsorption substrate 41, and the first ion exchange channels 401 have the same diameter. The first ion exchange channels 401 may be provided in the adsorption substrate 41 in the thickness direction of the adsorption substrate 41. The ion exchange channels 40 may be through holes or blind holes, and a space in each first ion exchange channel 401 can store more electrolyte, and improving electrolyte release and ion conduction and diffusion performances of the adsorption substrate 41. Optionally, the shape and arrangement position of the first ion exchange channel 401 correspond to the shape and arrangement position of the second ion exchange channel 402, and the second ion exchange channel 402 is in communication with the first ion exchange channel 401.

In some embodiments, the adsorption substrate 41 is of a material including at least one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A epoxy resin, ethylene-vinyl acetate copolymer bisphenol F epoxy resin, glycidyl ether type epoxy resin, glycidyl ester type epoxy resin, silicone resin, polyurethane, a styrene-isoprene-styrene copolymer, and modifications thereof.

In some embodiments, a component of the supporting layer 42 may include at least one of polyvinyl chloride, polyethylene, polypropylene, polyvinylidene fluoride, a hexafluoropropylene-vinylidene fluoride copolymer, a tetrafluoropropylene-vinylidene fluoride copolymer, a chlorotrifluoropropylene-vinylidene fluoride copolymer, polyethylene glycol terephthalate, polyimide, polyetherimide, polycarbonate, polystyrene, polyphenylene sulfide, polyvinylidene fluoride or a copolymer of the polyvinylidene fluoride, polyarylate, a fiber, nylon, a nonwoven, and modifications thereof.

In some embodiments, the supporting layer 42 has a thickness of ≤ 50 um, 0 < a porosity of the supporting layer 42 ≤ 50%, and/or the supporting layer 42 has a tensile modulus of ≤ 100 MPa, wherein the porosity of the supporting layer 42 is a ratio of a total area of the ion exchange channels 40 to an area of the supporting layer. The total area of the ion exchange channels 40 is the sum of areas of the one or more ion exchange channels.

In the embodiments, the setting of the thickness of the supporting layer 42 to ≤ 50 µm can control the gap between the cathode electrode plate 1 and the anode electrode plate 2 within a reasonable range, which is beneficial to ion transport. The porosity of the supporting layer 42 is set to 0 < the porosity of the supporting layer 42 ≤ 50%, for example, the porosity of the supporting layer 42 may be 0.05%, 0.08%, 0.1%, 0.5%, 1%, 2%, 5%, 10%, 15%, 30%, 40%, etc. When the electrolyte adsorption layer 4 is composed of an adsorption substrate 41 and a supporting layer 42, the porosity of the supporting layer 42 may be approximately equal to that of the electrolyte adsorption layer. With the control of the porosity of the supporting layer 42, it is possible to better restrain flow and deformation of the adsorption substrate 41 while enabling the ions to flow, and uniformly retain the adsorption substrate 41 on the surface of the cathode electrode plate 1, the anode electrode plate 2 or the separator 3, so that the electrolyte can be stably retained on the surface of the cathode electrode plate 1, the anode electrode plate 2 or the separator 3 for a long time, which is beneficial to improving the cycling performance and prolonging the service life of the battery. The tensile modulus of the supporting layer 42 ≤ 100 MPa enables the supporting layer 42 to have a better retention performance for the adsorption substrate 41.

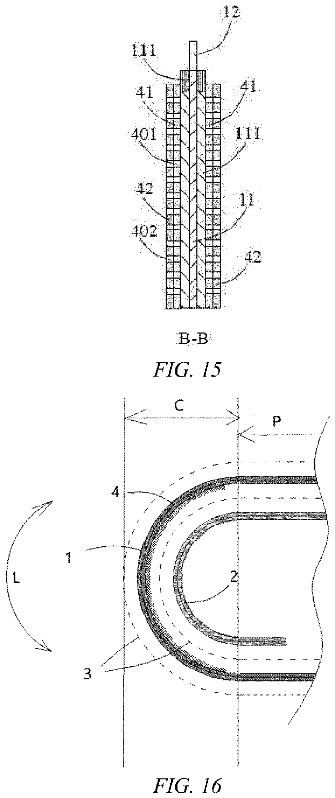

Fig. 15 is a schematic structural diagram of a cathode electrode plate according to another embodiment of the present application. In this embodiment, the structure of the cathode electrode plate 1 is the same as that in Fig. 11. The embodiment of Fig. 15 differs from the embodiment of Fig. 14 in that two sides of the cathode electrode plate 1 are each provided with an adsorption substrate 41 and a supporting layer 42. One side of the adsorption substrate 41 is attached to surfaces of the cathode active material layer 111 on either side of the cathode electrode plate 1, i.e., the surface of the cathode active material layer, and the supporting layer 42 is attached to the other side of the adsorption substrate 41.

In some embodiments not shown in the figures, an adsorption substrate 41 and a supporting layer 42 are attached to one or two surfaces of the anode electrode plate 2 or the separator 3. The specific structures of the adsorption substrate 41 and the supporting layer 42 and the attachment modes and positions of the adsorption substrate and the supporting layer on the anode electrode plate 2 or the separator 3 are the same as the attachment modes of the adsorption substrate and the supporting layer on the cathode electrode plate. Reference can be made to the structures of the embodiments of Figs. 10 to 15.

The foregoing embodiments only briefly describe the respective positional relationships between the electrolyte adsorption layer and the cathode electrode plate, the anode electrode plate and the separator, and structural features of the electrolyte adsorption layer. In order to make the respective positional relationships between the electrolyte adsorption layer and the cathode electrode plate, the anode electrode plate and the separator, and the structure of the electrolyte adsorption layer clearer, several electrode assemblies with wound structures are described in detail below.

As shown in Fig. 16, in another embodiment of the present application, regardless of whether an electrode assembly is formed by winding or by continuous folding in a Z shape, the electrode assembly includes a straight region and bent regions connected to two ends of the straight region. For simplicity of description, the electrode assembly of this embodiment is described by taking a flat wound structure as an example. For example, the structure of a bent region C and a straight region P of the flat wound structure may be as shown in Fig. 16, which is a schematic partial structural diagram of an electrode assembly in its bent region according to an embodiment of the present application. The electrode assembly includes, in its bent region C, a cathode electrode plate 1, an anode electrode plate 2, and a separator 3 for isolating the cathode electrode plate 1 from the anode electrode plate 2. The separator 3 may be separated from the adjacent cathode electrode plate 1 and anode electrode plate 2, or may be coated on the surface of the cathode electrode plate 1 or the anode electrode plate 2. In another embodiment of the present application, one separator 3, one cathode electrode plate 1, another separator 3 and one anode electrode plate 2 may be stacked and then wound or folded, or at least one (e.g., two or more) cathode electrode plate 1, at least one (e.g., two or more) anode electrode plate 2 and at least two separators (e.g., four or more, a quantity of the separators being twice that of the cathode electrode plates or the anode electrode plates) are stacked and then wound or folded, to form a bent region C. When the electrode assembly has a plurality of layers of cathode electrode plates 1, a plurality of layers of anode electrode plates 2, and a plurality of layers of separators 3 in the bent region C, the bent region C includes a structure in which the cathode electrode plates 1, the separators 3 and the anode electrode plates 2 are alternately distributed. An electrolyte adsorption layer 4 is attached to one surface or two surfaces of the cathode electrode plate 1, and/or one surface or two surfaces of the anode electrode plate 2, and/or one surface or two surfaces of the separator 3. Through such an arrangement, the electrolyte adsorption layer 4 is included between at least one layer of cathode electrode plate 1 and anode electrode plate 2 adjacent to each other. The cathode electrode plate 1 and anode electrode plate 2 adjacent to each other in the bent region C means that one layer of cathode electrode plate 1 and one layer of anode electrode plate 2 in the bent region C are adjacent to each other and no further layer of cathode electrode plate 1 or no further layer of anode electrode plate 2 is included therebetween.

When the electrode assembly has a wound structure, width directions of the cathode electrode plate 1 and the anode electrode plate 2 are parallel to the winding axis K, and the width directions of the cathode electrode plate 1 and the anode electrode plate 2 are parallel to a direction perpendicular to the winding direction L. When the electrode assembly has no wound structure, the width directions of the cathode electrode plate 1 and the anode electrode plate 2 are parallel to the direction perpendicular to the winding direction L. To simplify the following description, in this embodiment, the width directions of the cathode electrode plate 1 and the anode electrode plate 2, the direction perpendicular to the winding direction L and the winding axis K are collectively referred to as the winding axis K.

As shown in Fig. 16, in some embodiments, the cathode electrode plate 1, the separator 3, and the anode electrode plate 2 are wound to form a bent region C, and the electrolyte adsorption layer 4 is configured to be arranged along the bent region C of a surface of at least one of the cathode electrode plate 1, the anode electrode plate 2 and the separator 3. That is, the electrolyte adsorption layer 4 may be attached to a part of the surface of the cathode electrode plate 1, the anode electrode plate and/or the separator.

In the embodiments, in the bent region C, there is a relatively large gap between the cathode electrode plate 1 and the anode electrode plate 2. The arrangement of the electrolyte adsorption layer 4 in the bent region C can achieve better electrolyte storage and slow release effects. In the embodiments, through the arrangement of at least a part of the electrolyte adsorption layer 4 in the bent region C of the surface of at least one of the cathode electrode plate 1, the anode electrode plate 2 and the separator 3, the electrolyte adsorption layer 4 adsorbed with the electrolyte can fill a gap between the cathode electrode plate 1 and the anode electrode plate 2 in the bent region C, and can retain and slowly release the electrolyte in the bent region C to supplement the electrolyte consumed during cycling, which is beneficial to ion conduction and diffusion, thereby improving the performance of the battery cell. The electrolyte adsorption layer is provided with the ion exchange channels arranged in the thickness direction, which is beneficial to electrolyte release and ion conduction and diffusion, and is beneficial to improving the cycling performance and prolonging the service life of the battery cell. The arrangement of at least a part of the electrolyte adsorption layer 4 in the bent region C of the surface of at least one of the cathode electrode plate 1, the anode electrode plate 2 and the separator 3 specifically means that the electrolyte adsorption layer 4 is wholly located in the bent region C of the surface of at least one of the cathode electrode plate 1, the anode electrode plate 2 and the separator 3, or one part of the electrolyte adsorption layer 4 is located in the bent region C of the surface of at least one of the cathode electrode plate 1, the anode electrode plate 2 and the separator 3, and the other part thereof is located in the straight region P outside this region. In addition, through the arrangement of the electrolyte adsorption layer in the bent region(s) C of the surface(s) of the cathode electrode plate 1 and/or the anode electrode plate 2, the electrolyte adsorption layer 4 can further strengthen a cathode active material layer on the cathode electrode plate 1 and/or an anode active material layer on the anode electrode plate 2, to reduce breakage of the cathode active material layer on the cathode electrode plate 1 and/or the anode active material layer on the anode electrode plate 2 caused by bending, thereby improving the performance of the battery cell.

In another embodiment of the present application, two ends of the electrolyte adsorption layer 4 extending in the winding direction L are located in the bent region C, that is, the electrolyte adsorption layer 4 is wholly located in the bent region C. In this embodiment, the electrode assembly further includes a straight region P connected to the bent region C. The winding direction L means a direction that follows a curved surface of the bent region C and that points to the straight region P. The direction perpendicular to the winding direction L means a direction perpendicular to the winding direction L.

In another embodiment of the present application, one end of the electrolyte adsorption layer 4 extending in the winding direction L is located in the straight region P, and the other end thereof is located in the bent region C.

In another embodiment of the present application, to improve storage and retention performances of the electrolyte in the bent region C, the electrolyte adsorption layer 4 has an area which is as large as possible in the bent region C. For example, two ends of the electrolyte adsorption layer 4 extending in the winding direction L are both located in the straight region P, that is, the electrolyte adsorption layer 4 further extends to the straight region P in addition to being located in the bent region C.

In another embodiment of the present application, two ends of the electrolyte adsorption layer 4 extending in the winding direction L are both located at a junction of the bent region C and the straight region P, or the two ends of the electrolyte adsorption layer 4 extending in the winding direction L are both close to the junction of the bent region C and the straight region P.

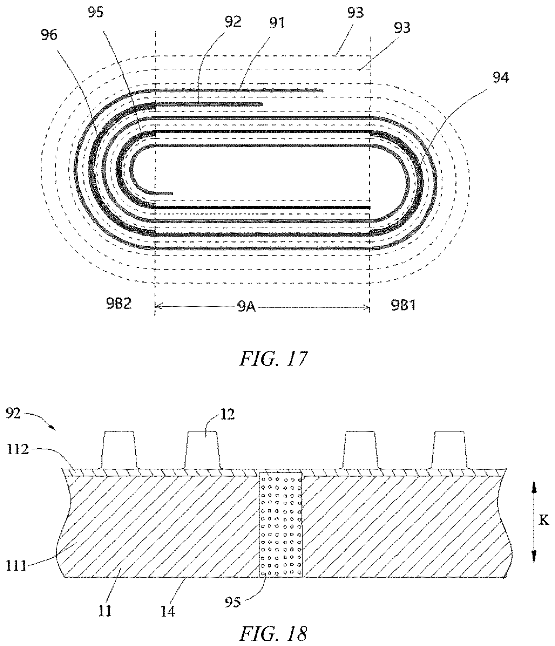

Fig. 17 is a schematic structural diagram of a cross-section of a flat-shaped electrode assembly perpendicular to a winding axis K according to another embodiment of the present application. The electrode assembly includes an anode electrode plate 91, a cathode electrode plate 92, separators 93, a first electrolyte adsorption layer 94, a second electrolyte adsorption layer 95, and a third electrolyte adsorption layer 96. The separators 93 are located between the anode electrode plate 91 and the cathode electrode plate 92, and there are two separators 93, which are represented by two wound dashed lines in the cross-sectional view of the electrode assembly in Fig. 17. The anode electrode plate 91, the cathode electrode plate 92, and the separators 93 are stacked and then wound around the winding axis to form a flat-shaped wound structure. Fig. 18 shows a schematic structure diagram of the cathode electrode plate 92 in Fig. 17 after being unwound, showing an attachment position of the second electrolyte adsorption layer 95 on the cathode electrode plate 92.

For the related technical features of the anode electrode plate 91, the cathode electrode plate 92, the separators 93 and the electrolyte adsorption layers 94-96 in this embodiment, reference can be made to the description of the embodiments corresponding to Figs 1-15. Details are not described herein again.

In this embodiment, a wound structure of the electrode assembly includes a straight region 9A, and a first bent region 9B1 and a second bent region 9B2 located on two sides of the straight region 9A, wherein the straight region 9A is separated from the first bent region 9B1 and the second bent region 9B2 respectively by straight dashed lines.

Anode electrode plates 91 and cathode electrode plates 92 included in the first bent region 9B1 and the second bent region 9B2 of the electrode assembly are alternately stacked in sequence, and there are separators 93 between adjacent anode electrode plates 91 and cathode electrode plates 92. The innermost electrode plates in the first bent region 9B1 and the second bent region 9B2 are both anode electrode plates 91, and electrolyte adsorption layers are provided (e.g., attached) on inner side surfaces of at least the innermost cathode electrode plates 92 in the first bent region 9B1 and the second bent region 9B2. For example, an electrolyte adsorption layer is provided (e.g., attached) on an inner side surface of each layer of cathode electrode plate 92 in the first bent region 9B1 and the second bent region 9B2. In this embodiment, the inner side surface of the cathode electrode plate 92 refers to a surface of the cathode electrode plate 92 facing a winding axis, or a surface of the cathode electrode plate facing the inside of the wound structure.

For example, the first bent region 9B1 has a plurality of layers of electrode plates, e.g., three layers of electrode plates. Electrode plates at the innermost layer (which may also be referred to as a first layer) and the outermost layer (which may also be referred to as a third layer) in the first bent region 9B1 are anode electrode plates 91, and an electrode plate (which may also be referred to as a second layer of electrode plate) between the innermost layer of electrode plate and the outermost layer of electrode plate is a cathode electrode plate 92. The cathode electrode plate 92 is the innermost cathode electrode plate in the first bent region 9B1, and a first electrolyte adsorption layer 94 is attached to the inner side surface of the cathode electrode plate 92 in the first bent region 9B1.

The second bent region 9B2 has a plurality of layers of electrode plates, e.g., five layers of electrode plates. The anode electrode plates 91 and the cathode electrode plates 92 in the second bent region 9B2 are alternately stacked in sequence in a direction from the inside to the outside of the wound structure. The innermost layer of electrode plate in the second bent region 9B2 is an anode electrode plate 91, and an electrolyte adsorption layer is attached to the inner side surface of each layer of cathode electrode plate 92 in the second bent region 9B2.

For example, in the direction from the inside to the outside of the wound structure, the second bent region 9B2 sequentially includes first, second, third, fourth and fifth layers of electrode plates. The first, third and fifth layers of electrode plates are anode electrode plates 91, and the second and fourth layers of electrode plates are cathode electrode plates 92. An electrolyte adsorption layer is attached to the inner side surface of each layer of cathode electrode plate 92 in the second bent region 9B2. For example, the second electrolyte adsorption layer 95 is attached to the inner side surface of the second layer of electrode plate (which is a cathode electrode plate 92) in the second bent region 9B2. The third electrolyte adsorption layer 96 is attached to the inner side surface of the fourth layer of electrode plate (which is a cathode electrode plate 92) in the second bent region 9B2.

In this embodiment, two ends of the first electrolyte adsorption layer 94, the second electrolyte adsorption layer 95 and the third electrolyte adsorption layer 96 in the winding direction L are each located at the junction of the bent regions and the straight region. For example, the two ends of the first electrolyte adsorption layer 94 in the winding direction are each located at the junction of the first bent region 9B1 and the straight region 9A, and the two ends of the second electrolyte adsorption layer 95 and the third electrolyte adsorption layer 96 in the winding direction are each located at the junction of the second bent region 9B2 and the straight region 9A.

In this embodiment, for relevant content, such as the functions, structures, and distribution modes, of the first electrolyte adsorption layer 94, the second electrolyte adsorption layer 95 and the third electrolyte adsorption layer 96, reference can be made to relevant content of the electrolyte adsorption layers described in the foregoing embodiment of Figs. 1-15.

Details are not described herein again.

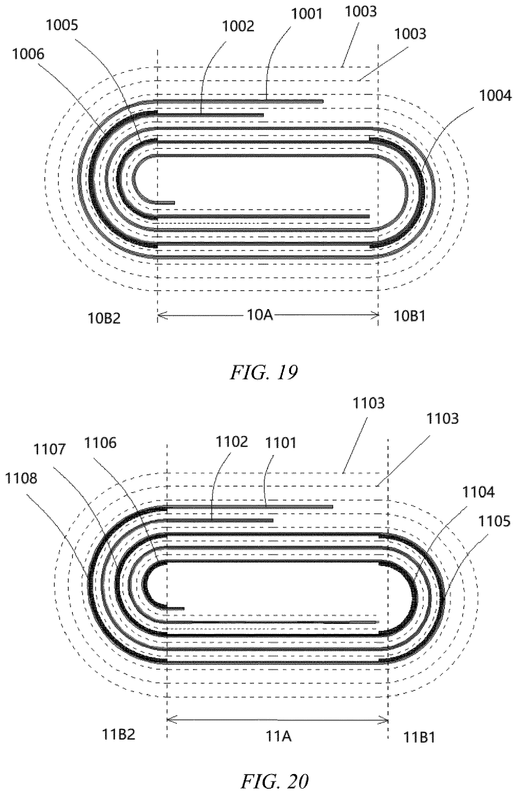

Fig. 19 is a schematic structural diagram of a cross-section of another flat-shaped electrode assembly perpendicular to a winding axis K according to another embodiment of the present application. The electrode assembly includes an anode electrode plate 1001, a cathode electrode plate 1002, separators 1003, a first electrolyte adsorption layer 1004, a second electrolyte adsorption layer 1005, and a third electrolyte adsorption layer 1006. The separators 1003 are located between the anode electrode plate 1001 and the cathode electrode plate 1002. The anode electrode plate 1001, the cathode electrode plate 1002, and the separators 1003 are stacked and then wound around the winding axis to form a flat-shaped wound structure.

For the related technical features of the anode electrode plate 1001, the cathode electrode plate 1002 and the separator 1003 in this embodiment, reference can be made to the description of the embodiments corresponding to Figs 1-15. Details are not described herein again.

In this embodiment, a wound structure of the electrode assembly includes a straight region 10A, and a first bent region 10B1 and a second bent region 10B2 located on two sides of the straight region 10A.

The electrode assembly of this embodiment is substantially similar to the electrode assemblies described in the embodiments corresponding to Figs. 17 and 18, but may have a difference as follows.

Electrolyte adsorption layers are provided (e.g., attached) on outer side surfaces of at least the innermost cathode electrode plates 1002 in the first bent region 10B1 and the second bent region 10B2. For example, an electrolyte adsorption layer is provided (e.g., attached) on an outer side surface of each layer of cathode electrode plate 1002 in the first bent region 10B1 and the second bent region 10B2. In this embodiment, the outer side surface of the cathode electrode plate 1002 refers to a surface of the cathode electrode plate 1002 that faces away from a winding axis, or a surface of the cathode electrode plate that faces away from the inside of the wound structure.

For example, the first electrolyte adsorption layer 1004 is attached to the outer side surface of the cathode electrode plate 1002 in the first bent region 10B1.

For example, the second electrolyte adsorption layer 1005 is attached to the outer side surface of the second layer of electrode plate (which is a cathode electrode plate 1002) in the second bent region 10B2. The third electrolyte adsorption layer 1006 is attached to the outer side surface of the fourth layer of electrode plate (which is a cathode electrode plate 1002) in the second bent region 10B2.

In this embodiment, the two ends of the first electrolyte adsorption layer 1004 in the winding direction are each located at the junction of the first bent region 10B1 and the straight region 10A, and the two ends of the second electrolyte adsorption layer 1005 and the third electrolyte adsorption layer 1006 in the winding direction are each located at the junction of the second bent region 10B2 and the straight region 10A.

In this embodiment, for relevant content, such as the functions, structures, and distribution modes, of the first electrolyte adsorption layer 1004, the second electrolyte adsorption layer 1005, and the third electrolyte adsorption layer 1006, reference may be further made to relevant content of the electrolyte adsorption layers described in the foregoing embodiment of Figs. 1-15. Details are not described herein again.

Fig. 20 is a schematic structural diagram of a cross-section of another flat-shaped electrode assembly perpendicular to a winding axis K according to another embodiment of the present application. The electrode assembly includes an anode electrode plate 1101, a cathode electrode plate 1102, separators 1103, a first electrolyte adsorption layer 1104, a second electrolyte adsorption layer 1105, a third electrolyte adsorption layer 1106, a fourth electrolyte adsorption layer 1107, and a fifth electrolyte adsorption layer 1108. The separators 1103 are located between the anode electrode plate 1101 and the cathode electrode plate 1102. The anode electrode plate 1101, the cathode electrode plate 1102, and the separators 1103 are stacked and then wound around the winding axis to form a flat-shaped wound structure.

For the related technical features of the anode electrode plate 1101, the cathode electrode plate 1102 and the separator 1103 in this embodiment, reference can be made to the description of the embodiments corresponding to Figs 1-15. Details are not described herein again.

In this embodiment, a wound structure of the electrode assembly includes a straight region 11A, and a first bent region 11B1 and a second bent region 11B2 located on two sides of the straight region 11A.

The electrode assembly of this embodiment is substantially similar to the electrode assemblies described in the embodiments corresponding to Figs. 17 and 18, but may have a difference as follows.

Electrolyte adsorption layers are provided (e.g., attached) on inner side surfaces of at least the innermost anode electrode plates 1101 in the first bent region 11B1 and the second bent region 11B2. For example, an electrolyte adsorption layer is provided on an inner side surface of each layer of anode electrode plate 1101 in the first bent region 11B 1 and the second bent region 11B2. In this embodiment, the inner side surface of the anode electrode plate 1101 refers to a surface of the anode electrode plate 1101 facing a winding axis, or a surface of the anode electrode plate facing the inside of the wound structure.

For example, the first electrolyte adsorption layer 1104 is attached to the inner side surface of the innermost layer of electrode plate (which is an anode electrode plate 1101) in the first bent region 11B1, and the second electrolyte adsorption layer 1105 is attached to the inner side surface of the outermost layer of electrode plate (which is an anode electrode plate 1101).

For example, the third electrolyte adsorption layer 1106 is attached to the inner side surface of the first layer of electrode plate (which is an anode electrode plate 1101) in the second bent region 11B2. The fourth electrolyte adsorption layer 1107 is attached to the inner side surface of the third layer of electrode plate (which is an anode electrode plate 1101) in the second bent region 11B2. The fifth electrolyte adsorption layer 1108 is attached to the inner side surface of the fifth layer of electrode plate (which is an anode electrode plate 1101) in the second bent region 11B2.

In this embodiment, the two ends of both the first electrolyte adsorption layer 1104 and the second electrolyte adsorption layer 1105 in the winding direction are each located at the junction of the first bent region 11B1 and the straight region 11A, and the two ends of the third electrolyte adsorption layer 1106, the fourth electrolyte adsorption layer 1107 and the fifth electrolyte adsorption layer 1108 in the winding direction are each located at the junction of the second bent region 11B2 and the straight region 11A.

In this embodiment, for relevant content, such as the functions, structures, and distribution modes, of the first electrolyte adsorption layer 1104, the second electrolyte adsorption layer 1105, the third electrolyte adsorption layer 1106, the fourth electrolyte adsorption layer 1107 and the fifth electrolyte adsorption layer 1108, reference can be made to relevant content of the electrolyte adsorption layers described in the foregoing embodiment of Figs. 1-15. Details are not described herein again.

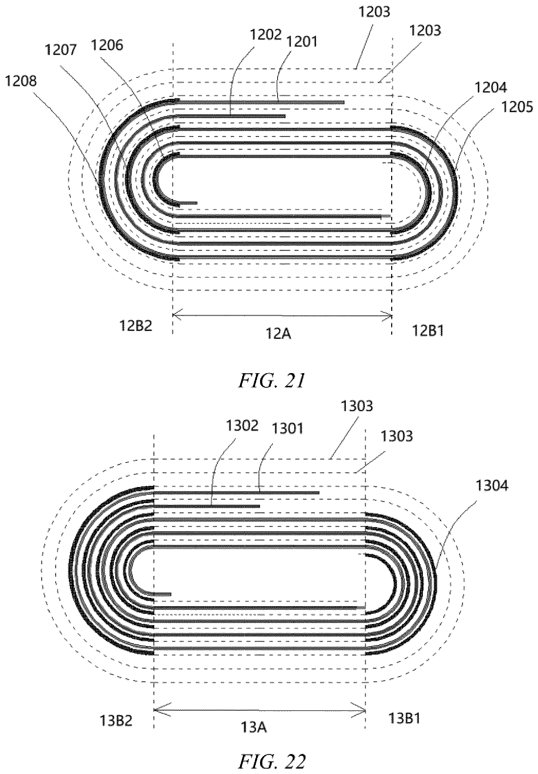

Fig. 21 is a schematic structural diagram of a cross-section of another flat-shaped electrode assembly perpendicular to a winding axis K according to another embodiment of the present application. The electrode assembly includes an anode electrode plate 1201, a cathode electrode plate 1202, separators 1203, a first electrolyte adsorption layer 1204, a second electrolyte adsorption layer 1205, a third electrolyte adsorption layer 1206, a fourth electrolyte adsorption layer 1207, and a fifth electrolyte adsorption layer 1208. The separators 1203 are located between the anode electrode plate 1201 and the cathode electrode plate 1202. The anode electrode plate 1201, the cathode electrode plate 1202, and the separators 1203 are stacked and then wound around the winding axis to form a flat-shaped wound structure.

For the related technical features of the anode electrode plate 1201, the cathode electrode plate 1202 and the separator 1203 in this embodiment, reference can be made to the description of the embodiments corresponding to Figs 1-15. Details are not described herein again.

In this embodiment, a wound structure of the electrode assembly includes a straight region 12A, and a first bent region 12B1 and a second bent region 12B2 located on two sides of the straight region 12A.

The electrode assembly of this embodiment is substantially similar to the electrode assemblies described in the embodiments corresponding to Figs. 17 and 18, but may have a difference as follows.

Electrolyte adsorption layers are provided (e.g., attached) on outer side surfaces of at least the innermost anode electrode plates 1201 in the first bent region 12B1 and the second bent region 12B2. For example, an electrolyte adsorption layer is provided on an outer side surface of each layer of anode electrode plate 1201 in the first bent region 12B 1 and the second bent region 12B2. In this embodiment, the outer side surface of the anode electrode plate 1201 refers to a surface of the anode electrode plate 1201 that faces away from a winding axis, or a surface of the anode electrode plate that faces away from the inside of the wound structure.

For example, the first electrolyte adsorption layer 1204 is attached to the outer side surface of the innermost layer of electrode plate (which is an anode electrode plate 1201) in the first bent region 12B1, and the second electrolyte adsorption layer 1205 is attached to the outer side surface of the outermost layer of electrode plate (which is an anode electrode plate 1201).

For example, the third electrolyte adsorption layer 1206 is attached to the outer side surface of the first layer of electrode plate (which is an anode electrode plate 1201) in the second bent region 12B2. The fourth electrolyte adsorption layer 1207 is attached to the outer side surface of the third layer of electrode plate (which is an anode electrode plate 1201) in the second bent region 12B2. The fifth electrolyte adsorption layer 1208 is attached to the outer side surface of the fifth layer of electrode plate (which is an anode electrode plate 1201) in the second bent region 12B2.

In this embodiment, the two ends of both the first electrolyte adsorption layer 1204 and the second electrolyte adsorption layer 1205 in the winding direction are each located at the junction of the first bent region 12B1 and the straight region 12A, and the two ends of the third electrolyte adsorption layer 1206, the fourth electrolyte adsorption layer 1207 and the fifth electrolyte adsorption layer 1208 in the winding direction are each located at the junction of the second bent region 12B2 and the straight region 12A.

In this embodiment, for relevant content, such as the functions, structures, and distribution modes, of the first electrolyte adsorption layer 1204, the second electrolyte adsorption layer 1205, the third electrolyte adsorption layer 1206, the fourth electrolyte adsorption layer 1207 and the fifth electrolyte adsorption layer 1208, reference can be made to relevant content of the electrolyte adsorption layers described in the foregoing embodiment of Figs. 1-15. Details are not described herein again.

Fig. 22 is a schematic structural diagram of a cross-section of another flat-shaped electrode assembly perpendicular to a winding axis K according to another embodiment of the present application. The electrode assembly includes an anode electrode plate 1301, a cathode electrode plate 1302, separators 1303, and a plurality of electrolyte adsorption layers 1304. The separators 1303 are located between the anode electrode plate 1301 and the cathode electrode plate 1302. The anode electrode plate 1301, the cathode electrode plate 1302, and the separators 1303 are stacked and then wound around the winding axis to form a flat-shaped wound structure.

For the related technical features of the anode electrode plate 1301, the cathode electrode plate 1302 and the separator 1303 in this embodiment, reference can be made to the description of the embodiments corresponding to Figs 1-15. Details are not described herein again.

In this embodiment, a wound structure of the electrode assembly includes a straight region 13A, and a first bent region 13B1 and a second bent region 13B2 located on two sides of the straight region 13A.

The electrode assembly of this embodiment is substantially similar to the electrode assemblies described in the embodiments corresponding to Figs. 17 and 18, but may have a difference as follows.

Electrolyte adsorption layers 1304 are attached to inner side surfaces of at least the innermost separators 1303 in the first bent region 13B1 and the second bent region 13B2. For example, an electrolyte adsorption layer 1304 is attached to an inner side surface of each layer of separator 1303 in the first bent region 13B1 and the second bent region 13B2. In this embodiment, the inner side surface of the separator 1303 refers to a surface of the separator 1303 facing a winding axis, or a surface of the separator facing the inside of the wound structure.

In this embodiment, the two ends of each electrolyte adsorption layer 1304 in the first bent region 13B1 in the winding direction are each located at the junction of the first bent region 13B1 and the straight region 13A, and the two ends of each electrolyte adsorption layer 1304 in the second bent region 13B2 in the winding direction are each located at the junction of the second bent region 12B2 and the straight region 12A.

In this embodiment, electrolyte adsorption layers 1304 are attached to inner side surfaces of separators 1303 adjacent to the cathode electrode plate 1302 or the anode electrode plate 1301 in the first bent region 13B1 and the second bent region 13B2, so that the electrolyte adsorption layers can supplement the electrolyte for the adjacent cathode electrode plate 1302 or anode electrode plate 1301.

In this embodiment, for relevant content, such as the functions, structures, and distribution modes, of each electrolyte adsorption layer 1304, reference can be made to relevant content of the electrolyte adsorption layers described in the foregoing embodiment of Figs. 1-15. Details are not described herein again.

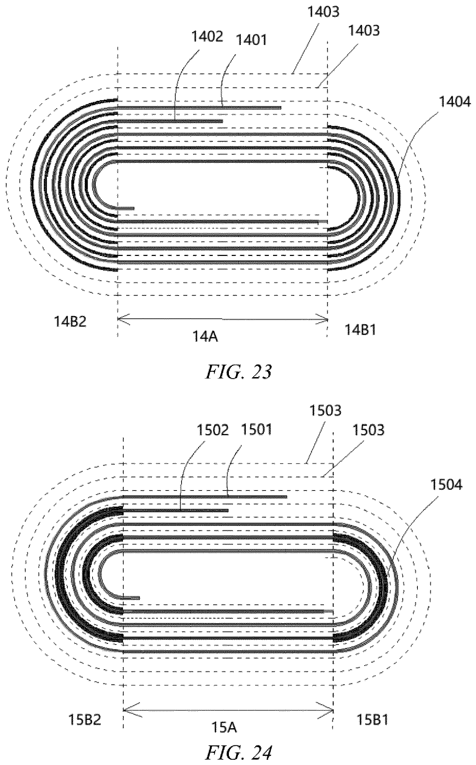

Fig. 23 is a schematic structural diagram of a cross-section of another flat-shaped electrode assembly perpendicular to a winding axis K according to another embodiment of the present application. The electrode assembly includes an anode electrode plate 1401, a cathode electrode plate 1402, separators 1403, and a plurality of electrolyte adsorption layers 1404. The separators 1403 are located between the anode electrode plate 1401 and the cathode electrode plate 1402. The anode electrode plate 1401, the cathode electrode plate 1402, and the separators 1403 are stacked and then wound around the winding axis to form a flat-shaped wound structure.

For the related technical features of the anode electrode plate 1401, the cathode electrode plate 1402 and the separator 1403 in this embodiment, reference can be made to the description of the embodiments corresponding to Figs 1-15. Details are not described herein again.

In this embodiment, a wound structure of the electrode assembly includes a straight region 14A, and a first bent region 14B1 and a second bent region 14B2 located on two sides of the straight region 14A.

The electrode assembly of this embodiment is substantially similar to the electrode assemblies described in the embodiments corresponding to Fig. 17, but may have a difference as follows.

Electrolyte adsorption layers 1404 are attached to outer side surfaces of at least the innermost separators 1403 in the first bent region 14B1 and the second bent region 14B2. For example, an electrolyte adsorption layer 1404 is attached to an outer side surface of each layer of separator 1403 in the first bent region 14B1 and the second bent region 14B2. In this embodiment, the outer side surface of the separator 1403 refers to a surface of the separator 1403 that faces away from a winding axis, or a surface of the separator that faces away from the inside of the wound structure.

In this embodiment, the two ends of each electrolyte adsorption layer 1404 in the first bent region 14B1 in the winding direction are each located at the junction of the first bent region 14B 1 and the straight region 14A, and the two ends of each electrolyte adsorption layer 1404 in the second bent region 14B2 in the winding direction are each located at the junction of the second bent region 14B2 and the straight region 14A.

In this embodiment, electrolyte adsorption layers 1404 are attached to outer side surfaces of separators 1403 adjacent to the cathode electrode plate 1402 or the anode electrode plate 1401 in the first bent region 14B1 and the second bent region 14B2, so that the electrolyte adsorption layers can supplement the electrolyte for the adjacent cathode electrode plate 1402 or anode electrode plate 1401.

In this embodiment, for relevant content, such as the functions, structures, and distribution modes, of each electrolyte adsorption layer 1404, reference can be made to relevant content of the electrolyte adsorption layers described in the foregoing embodiment of Figs. 1-15. Details are not described herein again.

In some embodiments not shown in the figures, at least a part of the electrolyte adsorption layer may also be attached to each of inner side surfaces and outer side surfaces of separators adjacent to the cathode electrode plate or the anode electrode plate in the first bent region and the second bent region, so that the electrolyte adsorption layers can supplement the electrolyte for the adjacent cathode electrode plate or anode electrode plate. In the foregoing embodiment, the separators adjacent to the cathode electrode plate or the anode electrode plate in the first bent region and the second bent region specifically refer to separators that are located in the first bent region and the second bent region and on the inner side and/or the outer side of the anode electrode plate, or on the inner side and/or the outer side of the cathode electrode plate.

In some embodiments not shown in the figures, at least a part of an electrolyte adsorption layer is attached to an inner side surface and/or an outer side surface of at least one of a bent portion of a separator adjacent to a first bent portion and a second bent portion of a cathode electrode plate, and a bent portion of a separator adjacent to a first bent portion and a second bent portion of an anode electrode plate. Specifically, at least a part of the electrolyte adsorption layer may be arranged on the separator on the inner side and/or the outer side of the first bent portion of the cathode electrode plate, and the separator on the inner side and/or the outer side of the second bent portion of the cathode electrode plate, and the electrolyte adsorption layer may be arranged on the inner side surface and/or the outer side surface of the separator. Alternatively, at least a part of the electrolyte adsorption layer may be arranged on the separator on the inner side and/or the outer side of the first bent portion of the anode electrode plate, and the separator on the inner side and/or the outer side of the second bent portion of the anode electrode plate, and the electrolyte adsorption layer may be arranged on the inner side surface and/or the outer side surface of the separator.

Through the arrangement of at least a part of the electrolyte adsorption layer on the separator in the first bent region and the second bent region, electrolyte uniformity at the first bent portion and the second bent portion where the gap between the cathode electrode plate and the anode electrode plate is relatively large can be improved, the influence on the energy density of the battery cell is reduced, and the performance of the battery cell is improved. Fig. 24 is a schematic structural diagram of a cross-section of another flat-shaped electrode assembly perpendicular to a winding axis K according to another embodiment of the present application. The electrode assembly includes an anode electrode plate 1501, a cathode electrode plate 1502, separators 1503, and a plurality of electrolyte adsorption layers 1504. The separators 1503 are located between the anode electrode plate 1501 and the cathode electrode plate 1502. The anode electrode plate 1501, the cathode electrode plate 1502, and the separators 1503 are stacked and then wound around the winding axis to form a flat-shaped wound structure.

For the related technical features of the anode electrode plate 1501, the cathode electrode plate 1502 and the separator 1503 in this embodiment, reference can be made to the description of the embodiments corresponding to Figs 1-15. Details are not described herein again.

In this embodiment, a wound structure of the electrode assembly includes a straight region 15A, and a first bent region 15B1 and a second bent region 15B2 located on two sides of the straight region 15A.

The electrode assembly of this embodiment is substantially similar to the electrode assemblies described in the embodiments corresponding to Figs. 17 and 18, but may have a difference as follows.

Anode electrode plates 1501 and cathode electrode plates 1502 included in the first bent region 15B1 and the second bent region 15B2 of the electrode assembly are alternately stacked in sequence, and there are separators 1503 between any adjacent anode electrode plates 1501 and cathode electrode plates 1502 in the first bent region 15B1 and the second bent region 15B2. The innermost electrode plates in the first bent region 15B1 and the second bent region 15B2 are both anode electrode plates 1501, and electrolyte adsorption layers 1504 are provided on inner side surfaces and outer side surfaces of at least the innermost cathode electrode plates 1502 in the first bent region 15B1 and the second bent region 15B2. For example, electrolyte adsorption layers 1504 are provided on an inner side surface and an outer side surface of each layer of cathode electrode plate 1502 in the first bent region 15B1 and the second bent region 15B2. In this embodiment, the inner side surface of the cathode electrode plate 1502 refers to a surface of the cathode electrode plate 1502 facing a winding axis, or a surface of the cathode electrode plate facing the inside of the wound structure; and the outer side surface of the cathode electrode plate 1502 refers to a surface of the cathode electrode plate 1502 that faces away from the winding axis, or a surface of the cathode electrode plate that faces away from the inside of the wound structure.

For example, the first bent region 15B1 has a plurality of layers of electrode plates, e.g., three layers of electrode plates. Electrode plates at the innermost layer (which may also be referred to as a first layer) and the outermost layer (which may also be referred to as a third layer) in the first bent region 15B1 are anode electrode plates 1501, and an electrode plate (which may also be referred to as a second layer of electrode plate) between the innermost layer of electrode plate and the outermost layer of electrode plate in the first bent region 15B1 is a cathode electrode plate 1502. Electrolyte adsorption layers 1504 are provided (e.g., attached) on the inner side surface and the outer side surface of the cathode electrode plate 1502 in the first bent region 15B1.

The second bent region 15B2 has a plurality of layers of electrode plates, e.g., five layers of electrode plates. The anode electrode plates 1501 and the cathode electrode plates 1502 in the second bent region 15B2 are alternately stacked in sequence in a direction from the inside to the outside of the wound structure. The innermost layer of electrode plate in the second bent region 15B2 is an anode electrode plate 1501, and electrolyte adsorption layers 1504 are provided (e.g., attached) on the inner side surface and the outer side surface of each layer of cathode electrode plate 1502 in the second bent region 15B2.

For example, in the direction from the inside to the outside of the wound structure, the second bent region 15B2 sequentially includes first, second, third, fourth and fifth layers of electrode plates. The first, third and fifth layers of electrode plates are anode electrode plates 1501, and the second and fourth layers of electrode plates are cathode electrode plates 1502. Electrolyte adsorption layers 1504 are provided on the inner side surface and the outer side surface of the second layer of electrode plate and the fourth layer of electrode plate in the second bent region 15B2.

In this embodiment, two ends of each electrolyte adsorption layer 1504 in the winding direction L are each located at the junction of the bent region and the straight region. For example, the two ends of each electrolyte adsorption layer 1504 in the first bent region 15B 1 in the winding direction are each located at the junction of the first bent region 15B 1 and the straight region 15A, and the two ends of each electrolyte adsorption layer 1504 in the second bent region 15B2 in the winding direction are each located at the junction of the second bent region 15B2 and the straight region 15A.

In this embodiment, for relevant content, such as the functions, structures, and distribution modes, of each electrolyte adsorption layer 1504, reference can be made to relevant content of the electrolyte adsorption layers described in the foregoing embodiment of Figs. 1-15. Details are not described herein again.

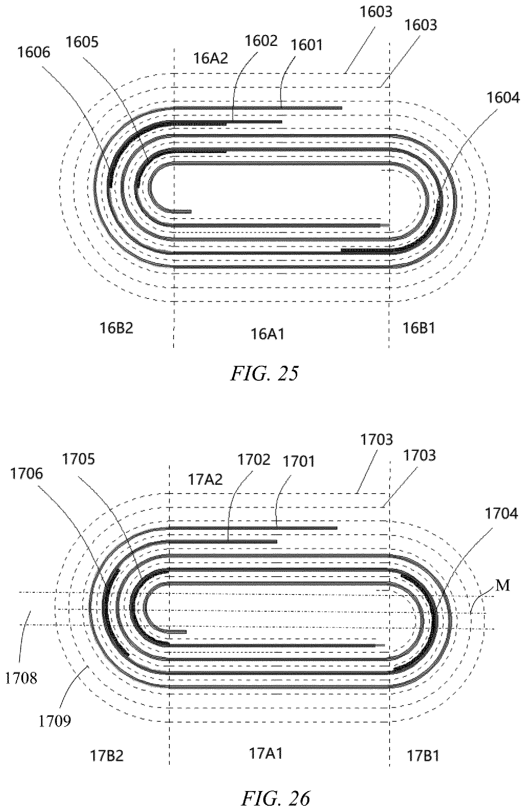

Fig. 25 is a schematic structural diagram of a cross-section of a flat-shaped electrode assembly perpendicular to a winding axis K according to another embodiment of the present application. The electrode assembly includes an anode electrode plate 1601, a cathode electrode plate 1602, separators 1603, a first electrolyte adsorption layer 1604, a second electrolyte adsorption layer 1605, and a third electrolyte adsorption layer 1606. The separators 1603 are located between the anode electrode plate 1601 and the cathode electrode plate 1602. The anode electrode plate 1601, the cathode electrode plate 1602, and the separators 1603 are stacked and then wound around the winding axis to form a flat-shaped wound structure.

For the related technical features of the anode electrode plate 1601, the cathode electrode plate 1602 and the separator 1603 in this embodiment, reference can be made to the description of the embodiments corresponding to Figs 1-15. Details are not described herein again.

The electrode assembly of this embodiment is substantially similar to the electrode assemblies described in the embodiments corresponding to Figs. 17 and 18, but may have a difference as follows.

In this embodiment, the wound structure of the electrode assembly includes a first straight region 16A1, a second straight region 16A2, a first bent region 16B1, and a second bent region 16B2. The first straight region 16A1 and the second straight region 16A2 are arranged opposite to each other, and the first bent region 16B1 and the second bent region 16B2 are arranged opposite to each other. Two ends of the first bent region 16B1 are respectively connected to ends of the first straight region 16A1 and the second straight region 16A2 that are on the same side, and two ends of the second bent region 16B2 are respectively connected to the other ends of the first straight region 16A1 and the second straight region 16A2 that are on the same side.

Anode electrode plates 1601 and cathode electrode plates 1602 included in the first bent region 16B1 and the second bent region 16B2 of the electrode assembly are alternately stacked in sequence, and there are separators 1603 between adjacent anode electrode plates 1601 and cathode electrode plates 1602. The innermost electrode plates in the first bent region 16B1 and the second bent region 16B2 are both anode electrode plates 1601, and electrolyte adsorption layers are provided (e.g., attached) on inner side surfaces of at least the innermost cathode electrode plates 1602 in the first bent region 16B1 and the second bent region 16B2. For example, an electrolyte adsorption layer is provided (e.g., attached) on an inner side surface of each layer of cathode electrode plate 1602 in the first bent region 16B1 and the second bent region 16B2. In this embodiment, the inner side surface of the cathode electrode plate 1602 refers to a surface of the cathode electrode plate 1602 facing a winding axis, or a surface of the cathode electrode plate facing the inside of the wound structure.

For example, the first bent region 16B1 has a plurality of layers of electrode plates, e.g., three layers of electrode plates. Electrode plates at the innermost layer (which may also be referred to as a first layer) and the outermost layer (which may also be referred to as a third layer) in the first bent region 16B1 are anode electrode plates 1601, and an electrode plate (which may also be referred to as a second layer of electrode plate) between the innermost layer of electrode plate and the outermost layer of electrode plate is a cathode electrode plate 1602. A first electrolyte adsorption layer 1604 is attached to the inner side surface of the cathode electrode plate 1602 in the first bent region 16B1.

For example, the second bent region 16B2 has a plurality of layers of electrode plates, e.g., five layers of electrode plates. The anode electrode plates 1601 and the cathode electrode plates 1602 in the second bent region 16B2 are alternately stacked in sequence in a direction from the inside to the outside of the wound structure. The innermost layer of electrode plate in the second bent region 16B2 is an anode electrode plate 1601, and an electrolyte adsorption layer is attached to the inner side surface of each layer of cathode electrode plate 1602 in the second bent region 16B2.

For example, in the direction from the inside to the outside of the wound structure, the second bent region 16B2 sequentially includes first, second, third, fourth and fifth layers of electrode plates. The first, third and fifth layers of electrode plates are anode electrode plates 1601, and the second and fourth layers of electrode plates are cathode electrode plates 1602. The second electrolyte adsorption layer 1605 is attached to the inner side surface of the cathode electrode plate 1602 among the innermost adjacent anode electrode plate 1601 and cathode electrode plate 1602 in the second bent region 16B2. That is, the second electrolyte adsorption layer 1605 is attached to the inner side surface of the second layer of electrode plate (which is a cathode electrode plate 1602) in the second bent region 16B2. The third electrolyte adsorption layer 1606 is attached to the inner side surface of the fourth layer of electrode plate (which is a cathode electrode plate 1602) in the second bent region 16B2.

In this embodiment, the first electrolyte adsorption layer 1604 includes a first end and a second end in the winding direction L. The first end of the first electrolyte adsorption layer 1604 is located in the first bent region 16B1, and the second end of the first electrolyte adsorption layer 1604 is located in the first straight region 16A1. The second electrolyte adsorption layer 1605 includes a first end and a second end in the winding direction L. The first end of the second electrolyte adsorption layer 1605 is located in the second bent region 16B2, and the second end of the second electrolyte adsorption layer 1605 is located in the second straight region 16A2. The third electrolyte adsorption layer 1606 includes a first end and a second end in the winding direction L. The first end of the third electrolyte adsorption layer 1606 is located in the second bent region 16B2, and the second end of the third electrolyte adsorption layer 1606 is located in the second straight region 16A2. In another embodiment of the present application, the first end of the third electrolyte adsorption layer 1606 is located in the second bent region 16B2, and the second end of the third electrolyte adsorption layer 1606 may be located in the first straight region 16A1.

In this embodiment, for relevant content, such as the functions, structures, and distribution modes, of the first electrolyte adsorption layer 1604, the second electrolyte adsorption layer 1605 and the third electrolyte adsorption layer 1606, reference can be made to relevant content of the electrolyte adsorption layers described in the foregoing embodiment of Figs. 1-15. Details are not described herein again.

Fig. 26 is a schematic structural diagram of a cross-section of a flat-shaped electrode assembly perpendicular to a winding axis K according to another embodiment of the present application. The electrode assembly includes an anode electrode plate 1701, a cathode electrode plate 1702, separators 1703, a first electrolyte adsorption layer 1704, a second electrolyte adsorption layer 1705, and a third electrolyte adsorption layer 1706. The separators 1703 are located between the anode electrode plate 1701 and the cathode electrode plate 1702. The anode electrode plate 1701, the cathode electrode plate 1702, and the separators 1703 are stacked and then wound around the winding axis to form a flat-shaped wound structure.

For the related technical features of the anode electrode plate 1701, the cathode electrode plate 1702 and the separator 1703 in this embodiment, reference can be made to the description of the embodiments corresponding to Figs 1-15. Details are not described herein again.

The electrode assembly of this embodiment is substantially similar to the electrode assemblies described in the embodiments corresponding to Figs. 17 and 18, but may have a difference as follows.

In this embodiment, the wound structure of the electrode assembly includes a first straight region 17A1, a second straight region 17A2, a first bent region 17B1, and a second bent region 17B2. The first straight region 17A1 and the second straight region 17A2 are arranged opposite to each other, and the first bent region 17B1 and the second bent region 17B2 are arranged opposite to each other. Two ends of the first bent region 17B 1 are respectively connected to ends of the first straight region 17A1 and the second straight region 17A2 that are on the same side, and two ends of the second bent region 17B2 are respectively connected to the other ends of the first straight region 17A1 and the second straight region 17A2 that are on the same side.

Anode electrode plates 1701 and cathode electrode plates 1702 included in the first bent region 17B1 and the second bent region 17B2 of the electrode assembly are alternately stacked in sequence, and there are separators 1703 between adjacent anode electrode plates 1701 and cathode electrode plates 1702. The innermost electrode plates in the first bent region 17B1 and the second bent region 17B2 are both anode electrode plates 1701, and electrolyte adsorption layers are provided (e.g., attached) on inner side surfaces of at least the innermost cathode electrode plates 1702 in the first bent region 17B1 and the second bent region 17B2. For example, an electrolyte adsorption layer is provided (e.g., attached) on an inner side surface of each layer of cathode electrode plate 1702 in the first bent region 17B1 and the second bent region 17B2. In this embodiment, the inner side surface of the cathode electrode plate 1702 refers to a surface of the cathode electrode plate 1702 facing a winding axis, or a surface of the cathode electrode plate facing the inside of the wound structure.

For example, the first bent region 17B1 has a plurality of layers of electrode plates, e.g., three layers of electrode plates. Electrode plates at the innermost layer (which may also be referred to as a first layer) and the outermost layer (which may also be referred to as a third layer) in the first bent region 17B1 are anode electrode plates 1701, and an electrode plate (which may also be referred to as a second layer of electrode plate) between the innermost layer of electrode plate and the outermost layer of electrode plate is a cathode electrode plate 1702. A first electrolyte adsorption layer 1704 is attached to the inner side surface of the cathode electrode plate 1702 in the first bent region 17B1.

The second bent region 17B2 has a plurality of layers of electrode plates, e.g., five layers of electrode plates. The anode electrode plates 1701 and the cathode electrode plates 1702 in the second bent region 17B2 are alternately stacked in sequence in a direction from the inside to the outside of the wound structure. The innermost layer of electrode plate in the second bent region 17B2 is an anode electrode plate 1701, and an electrolyte adsorption layer is attached to the inner side surface of each layer of cathode electrode plate 1702 in the second bent region 17B2.

For example, in the direction from the inside to the outside of the wound structure, the second bent region 17B2 sequentially includes first, second, third, fourth and fifth layers of electrode plates. The first, third and fifth layers of electrode plates are anode electrode plates 1701, and the second and fourth layers of electrode plates are cathode electrode plates 1702. The second electrolyte adsorption layer 1705 is attached to the inner side surface of the cathode electrode plate 1702 among the innermost adjacent anode electrode plate 1701 and cathode electrode plate 1702 in the second bent region 17B2. That is, the second electrolyte adsorption layer 1705 is attached to the inner side surface of the second layer of electrode plate (which is a cathode electrode plate 1702) in the second bent region 17B2. The third electrolyte adsorption layer 1706 is attached to the inner side surface of the fourth layer of electrode plate (which is a cathode electrode plate 1702) in the second bent region 17B2.

In this embodiment, the first electrolyte adsorption layer 1704 includes a first end and a second end in the winding direction L. The first end and the second end of the first electrolyte adsorption layer 1704 are both located in the first bent region 17B 1. The second electrolyte adsorption layer 1705 includes a first end and a second end in the winding direction L. The first end of the second electrolyte adsorption layer 1705 is located at a junction of the second bent region 17B2 and the first straight region 17A1, and the second end of the second electrolyte adsorption layer 1705 is located at a junction of the second bent region 17B2 and the second straight region 17A2. The third electrolyte adsorption layer 1706 includes a first end and a second end in the winding direction L. The first end and the second end of the third electrolyte adsorption layer 1706 are both located in the second bent region 17B2.

In this embodiment, in the second bent region 17B2, in a direction perpendicular to the winding axis K and from the inside to the outside of the electrode assembly, the layers of electrode plates have gradually decreasing curvatures, that is, gradually decreasing bending degrees. Therefore, in the direction perpendicular to the winding axis K and from the inside to the outside of the electrode assembly, circumferential angles covered by the electrolyte adsorption layers in the second bent region 17B2 in the winding direction may be gradually reduced. For example, the circumferential angle covered by the third electrolyte adsorption layer 1706 in the second bent region 17B2 in the winding direction is less than the circumferential angle covered by the second electrolyte adsorption layer 1705 in the second bent region 17B2. For example, the circumferential angle covered by the third electrolyte adsorption layer 1706 in the second bent region 17B2 in the winding direction is 90°, and the circumferential angle covered by the second electrolyte adsorption layer 1705 in the second bent region 17B2 in the winding direction is 180°.

In this embodiment, for relevant content, such as the functions, structures, and distribution modes, of the first electrolyte adsorption layer 1704, the second electrolyte adsorption layer 1705 and the third electrolyte adsorption layer 1706, reference can be made to relevant content of the electrolyte adsorption layers described in the foregoing embodiment of Figs. 1-15. Details are not described herein again.

In addition, in the embodiments of Figs. 17-26, an electrolyte adsorption layer 4 may be arranged at a bent portion of at least one of the cathode electrode plates, the anode electrode plates and the separators in the first bent region and the second bent region that corresponds to a predetermined number of bending. In some embodiments, at least a part of the electrolyte adsorption layer is arranged on a first bent portion and/or a second bent portion of the cathode electrode plate in the bent region, and/or at least a part of the electrolyte adsorption layer is arranged on a first bent portion and/or a second bent portion of the anode electrode plate, and/or at least a part of the electrolyte adsorption layer is arranged on a bent portion of the separator adjacent to the first bent portion of the cathode electrode plate and/or a bent portion of the separator adjacent to the second bent portion of the cathode electrode plate, and/or at least a part of the electrolyte adsorption layer is arranged on a bent portion of the separator adjacent to the first bent portion of the anode electrode plate and/or a bent portion of the separator adjacent to the second bent portion of the anode electrode plate. In this embodiment, the predetermined number of bending refers to the number of times that is determined according to a bending sequence during winding of the cathode electrode plates, the separators and the anode electrode plates from the inside to the outside to form a motor assembly. Taking the embodiment of Fig. 17 as an example, for the cathode electrode plate 92, the cathode electrode plate 92 is bent for the first time at the position of the second electrolyte adsorption layer 95, the cathode electrode plate 92 is bent for the second time at the position of the first electrolyte adsorption layer 94, the cathode electrode plate 92 is bent for the third time at the position of the third electrolyte adsorption layer 96, and so on. In addition, taking the embodiment of Fig. 20 as an example, the anode electrode plate 1101 is bent for the first time at the position of the third electrolyte adsorption layer 1106, the anode electrode plate 1101 is bent for the second time at the position of the first electrolyte adsorption layer 1104, the anode electrode plate 1101 is bent for the third time at the position of the fourth electrolyte adsorption layer 1107, and so on. However, the predetermined number of bending of the cathode electrode plate and the anode electrode plate are not limited to the first and the second, and a range of any number of bending times may be selected as required. For example, the electrolyte adsorption layers 4 may be arranged at bent portions of the cathode electrode plate in the bent region that are bent for the 1st-4th or 1 st-6th or 1 st-8th or 3rd-4th or 3rd-6th or 3rd-8th times or a different range of number of times, and/or the electrolyte adsorption layers 4 are arranged at bent portions of the anode electrode plate in the bent region that are bent for the 1st-4th or 1st-6th or 1st-8th or 3rd-4th or 3rd-6th or 3rd-8th times or a different range of number of times, and/or the electrolyte adsorption layers 4 are arranged at bent portions of separators adjacent to bent portions of the cathode electrode plate in the bent region that are bent for the 1st-4th or 1st-6th or 1 st-8th or 3rd-4th or 3rd-6th or 3rd-8th times or a different range of number of times, or at bent portions of separators adjacent to bent portions of the anode electrode plate that are bent for the 1st-4th or 1st-6th or 1st-8th or 3rd-4th or 3rd-6th or 3rd-8th times or a different range of number of times. In the foregoing embodiment, the separators adjacent to the cathode electrode plate or the anode electrode plate in the first bent region and the second bent region specifically refer to separators that are located in the first bent region and the second bent region and on the inner side and/or the outer side of the anode electrode plate, or on the inner side and/or the outer side of the cathode electrode plate.

In this embodiment, the electrolyte adsorption layers are provided at bent portions of at least one of the cathode electrode plate, the anode electrode plate and the separator that correspond to predetermined numbers of bending. The electrolyte at bent portions that correspond to predetermined numbers of bending and have a relatively gap between the cathode electrode plate 1 and the anode electrode plate 2 may be regulated. For example, when the predetermined numbers of bending include a first bending and a second bending, only the electrolyte at the first bent portion and the second bent portion is regulated, to improve the electrolyte storage and retention performance of the first bent portion and the second bent portion of the cathode electrode plate 1 or the anode electrode plate 2, improving the ion conduction and diffusion performance, and improving the cycling performance and prolonging the service life of the battery cell. In addition, through the arrangement of the electrolyte adsorption layer on the first bent portion and the second bent portion in the bent region(s) of the surface(s) of the cathode electrode plate and/or the anode electrode plate, the electrolyte adsorption layer can further strengthen the cathode active material layer on the first bent portion and the second bent portion of the cathode electrode plate and/or the anode active material layer on the first bent portion and the second bent portion of the anode electrode plate, to reduce breakage of the active material layer(s) caused by bending, thereby improving the performance of the battery cell.

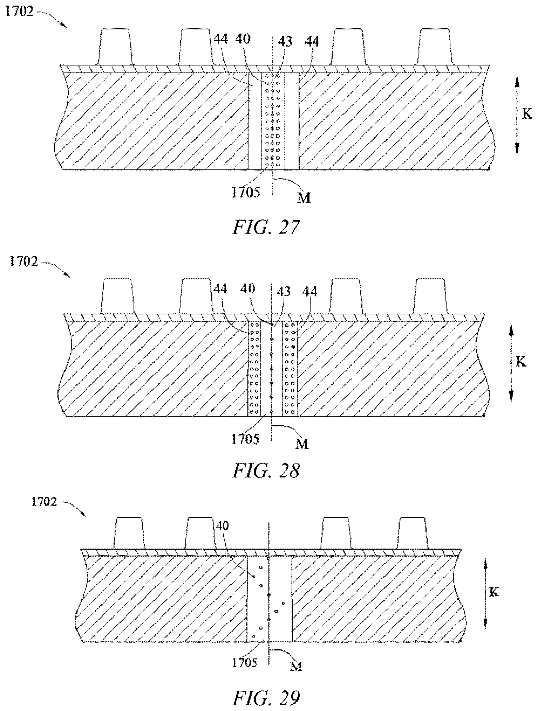

Fig. 27 is a schematic diagram of a cathode electrode plate 1702 according to another embodiment of the present application after being unwound, which is specifically a schematic diagram of an unwound cathode electrode plate 1702 at a position where a second electrolyte adsorption layer 1705 is attached in Fig. 27. A first bent region 17B 1 and a second bent region 17B2 each have a midline M. The midline M is parallel to the winding axis of the electrode assembly and extends in a length direction of the electrode assembly in Fig. 26. The midline M divides each of the first bent region 17B 1 and the second bent region 17B2 into an upper part and a second part in a width direction of the electrode assembly.

The second electrolyte adsorption layer 1705 includes a middle adsorption layer 43 in a first bent subregion 1708, and a side adsorption layer 44 in a second bent subregion 1709. The first bent subregion 1708 covers the midline M of the bent region, that is, the first bent subregion 1708 is generally located in the middle of the bent region. The second bent subregion 1709 is located on at least one side of the first bent subregion 1708. As shown in Fig. 27, optionally, two sides of the first bent subregion are each provided with one second bent subregion 1709. As shown in Fig. 27, the middle adsorption layer 43 has a porosity greater than that of the side adsorption layer 44. A porosity of an electrolyte adsorption layer in each different bent subregion is a ratio of the sum of areas of all ion exchange channels 40 in the electrolyte adsorption layer in the subregion to an area of the electrolyte adsorption layer in this region. The porosity of the electrolyte adsorption layer can be adjusted by changing diameters of the ion exchange channels 40 and a quantity of ion exchange channels per unit area in the electrolyte adsorption layer. For example, the diameters of the ion exchange channels 40 and/or the quantity of ion exchange channels per unit area in the middle adsorption layer 43 may be greater than the diameters of the ion exchange channels 40 and/or the quantity of ion exchange channels per unit area in the side adsorption layer 44. The structure of the second electrolyte adsorption layer 1705 in this embodiment may be arranged on one surface or two surfaces of each bent portion of at least one of the cathode electrode plate, the anode electrode plate and the separator and that corresponds to a predetermined number of bending. In some embodiments, 0 < the porosity of the middle adsorption layer 43 ≤ 50%. The porosity of the middle adsorption layer 43 may be 0.05%, 0.08%, 0.1%, 0.5%, 1%, 2%, 5%, 10%, 15%, 30%, 40%, or a different value. In some embodiments, the porosity of the side adsorption layer 44 may be 0, that is, no ion exchange channel 40 is provided in the side adsorption layer 44. It is also possible that 0 < the porosity of the side adsorption layer 44 ≤ 50%. The porosity of the side adsorption layer 44 may be 0, 0.05%, 0.08%, 0.1%, 0.5%, 1%, 2%, 5%, 10%, 15%, 30%, 40%, or a different value.

As shown in Fig. 28, the porosity of the middle adsorption layer 43 may also be less than that of the side adsorption layer 44. For example, the diameters of the ion exchange channels 40 and/or the quantity of ion exchange channels per unit area in the middle adsorption layer 43 may be less than the diameters of the ion exchange channels 40 and/or the quantity of ion exchange channels per unit area in the side adsorption layer 44. The structure of the second electrolyte adsorption layer 1705 in this embodiment may be arranged on one surface or two surfaces of each bent portion of at least one of the cathode electrode plate, the anode electrode plate and the separator and that corresponds to a predetermined number of bending. In some embodiments, 0 < the porosity of the side adsorption layer 44 ≤ 50%. The porosity of the side adsorption layer 44 may be 0.05%, 0.08%, 0.1%, 0.5%, 1%, 2%, 5%, 10%, 15%, 30%, 40%, or a different value. In some embodiments, the porosity of the middle adsorption layer 43 may be 0, that is, no ion exchange channel 40 is provided in the middle adsorption layer 43. It is also possible that 0 < the porosity of the middle adsorption layer 43 ≤ 50%. The porosity of the middle adsorption layer 43 may be 0, 0.05%, 0.08%, 0.1%, 0.5%, 1%, 2%, 5%, 10%, 15%, 30%, 40%, or a different value.

Fig. 29 is a schematic diagram of a cathode electrode plate 1702 according to another embodiment of the present application after being unfolded, which is specifically a schematic diagram of an unfolded cathode electrode plate 1702 at a position where a second electrolyte adsorption layer 1705 is attached in Fig. 26. In a bent region, in a direction parallel to the winding axis K of the electrode assembly, ion exchange channels 40 are distributed along a broken line or a curve in a second electrolyte adsorption layer 1705. The ion exchange channels 40 are arranged along a broken line or a curve in the second electrolyte adsorption layer 1705, so that the ion exchange channels 40 are distributed at different widths and heights of the second electrolyte adsorption layer 1705, and the second electrolyte adsorption layer 1705 can implement electrolyte release and ion conduction and diffusion at different heights and widths, which is beneficial to improving the cycling performance and prolonging the service life of the battery. In this embodiment, 0 < the porosity of the second electrolyte adsorption layer 1705 ≤ 50%. The porosity of the second electrolyte adsorption layer 1705 may be 0.05%, 0.08%, 0.1%, 0.5%, 1%, 2%, 5%, 10%, 15%, 30%, 40%, or a different value.

The embodiments of Figs. 27 to 29 only briefly describe the respective positional relationships between the electrolyte adsorption layers and the cathode electrode plate and the structural features of the electrolyte adsorption layers. The electrolyte adsorption layers of Figs. 27 to 29 are not limited to being arranged on the first bent portion and the second bent portion of the cathode electrode plate, but may be arranged at other portions of the cathode electrode plate, as well as the anode electrode plate and the separator. The structures of the electrolyte adsorption layers of the embodiments of Figs. 27 to 29 can be applied to the structure of the electrolyte adsorption layer according to any one of the embodiments of Figs. 3-8 and Figs. 11-26.

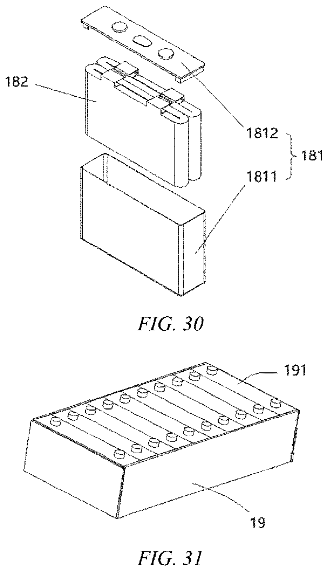

Fig. 30 shows a schematic structural diagram of a battery cell according to another embodiment of the present application. The battery cell includes a shell 181 and one or more electrode assemblies 182 accommodated in the shell 181. The shell 181 includes a housing 1811 and a cover plate 1812. The housing 1811 has an accommodating cavity, and the housing 1811 has an opening, that is, this flat surface has no housing wall, so that the inside and the outside of the housing 1811 are communication with each other, and thus the electrode assembly 182 can be received in the accommodating cavity of the housing 1811. The cover plate 1812 and the housing 1811 are joined at the opening of the housing 1811 to form a hollow cavity. After the electrode assembly 182 is accommodated in the shell 181, the shell 181 is filled with an electrolyte and sealed.

The housing 1811 is shaped according to the combined shape of the one or more electrode assemblies 182. For example, the housing 1811 may be a hollow cuboid, a hollow cube, or a hollow cylinder. For example, when the housing 1811 is a hollow cuboid or cube, one of the flat surfaces of the housing 1811 is an open surface, that is, the flat surface has no housing wall, so that the inside and the outside of the housing 1811 are in communication with each other. When the housing 1811 is a hollow cylinder, one circular side surface of the housing 1811 is an open surface, that is, the circular side surface has no housing wall, so that the inside and the outside of the housing 1811 are in communication with each other.

In another embodiment of the present application, the housing 1811 may be made of a conductive metal material or plastic. Optionally, the housing 1811 may be made of aluminium or an aluminium alloy.

For the structure of the electrode assembly 182, reference can be made to the related content of the electrode assembly described in the foregoing embodiments of Figs. 1-27. Details are not described herein again.

Fig. 31 shows a schematic structural diagram of a battery module according to another embodiment of the present application. The battery module 19 includes a plurality of battery cells 191 connected to each other. The plurality of battery cells 191 may be connected in series or in parallel or in series-parallel. The series-parallel connection means that the connection includes both series and parallel connections. For the structure of the battery cell 191, reference can be made to the battery cell described in the embodiment corresponding to Fig. 30. Details are not described herein again.

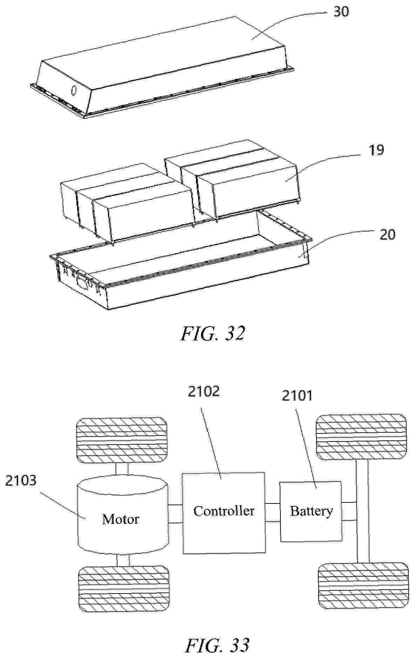

Fig. 32 is a schematic structural diagram of a battery according to another embodiment of the present application. The battery includes a case in which a plurality of battery cells are accommodated. For the structure of the battery cell, reference can be made to the structure of the battery cell shown in Fig. 30. A specific method for causing the plurality of battery cells to be accommodated in the case may include: directly mounting the battery cells in the case, or forming a battery module from the plurality of battery cells, and then mounting the battery module in the battery.

As shown in Fig. 32, in some embodiments, the battery includes a plurality of battery modules 19 and a case, wherein the case includes a lower case 20 and an upper case 30, and the plurality of battery modules 19 may be connected in series or in parallel or in series-parallel. The lower case 20 has an accommodating cavity, and the lower case 20 has an opening, such that the plurality of battery modules 19 after being connected can be received in the accommodating cavity of the lower case 20. The upper case 30 and the lower case 20 are joined at the opening of the lower case 20 to form a hollow cavity, and the upper case 30 and the lower case 20 are joined and then sealed.

In another embodiment of the present application, the battery may supply power to a power consuming device alone, and may be referred to as a battery pack, for example, for supplying power to a vehicle.

In another embodiment of the present application, according to the power requirements of the power consuming device, a plurality of batteries are connected to each other and then combined into a battery bank for supplying power to the power consuming device. In another embodiment of the present application, the battery bank may also be accommodated in one case and packaged.

For the sake of brevity, the following embodiment is described by taking a power consuming device that includes a battery as an example.

An embodiment of the present application further provides a power consuming device. For example, the power consuming device may be a vehicle, such as a new-energy vehicle. The power consuming device includes the battery described in the foregoing embodiment, wherein the battery used by the power consuming device may be the battery described in the embodiment corresponding to Fig. 31. Details are not described herein again.

For example, Fig. 33 shows a schematic structural diagram of a power consuming device according to another embodiment of the present application. The power consuming device may be a vehicle, which may be a fuel vehicle, a gas vehicle or a new-energy vehicle. The new-energy vehicle may be a battery electric vehicle, a hybrid vehicle, an extended-range vehicle, or the like. The vehicle includes a battery 2101, a controller 2102, and a motor 2103. The battery 2101 is configured to supply power to the controller 2102 and the motor 2103 as an operating power supply and a driving power supply of the vehicle. For example, the battery 2101 is used for meeting the working power requirements of the vehicle during starting, navigating and running. For example, the battery 2101 supplies power to the controller 2102, the controller 2102 controls the battery 2101 to supply power to the motor 2103, and the motor 2103 receives and uses the power from the battery 2101 as the driving power of the vehicle, replacing or partially replacing the driving power provided by the fuel or natural gas for the vehicle.

Those skilled in the art should understand that, although some of the embodiments herein include some but not other features included in other embodiments, the combination of the features of different embodiments means being within the scope of the present application and forms different embodiments. For example, in the claims, any one of the claimed embodiments can be used in any combination.

The foregoing embodiments are merely used for illustrating, rather than limiting, the technical solutions of the present application. Although the present application has been illustrated in detail with reference to the foregoing embodiments, it should be understood by those of ordinary skill in the art that modifications can still be made to the technical solution described in the foregoing embodiments or equivalent substitutions of some technical features thereof is also possible, while these modifications or substitutions do not make the essence of the corresponding technical solution depart from the spirit and scope of the technical solutions of the embodiments of the application.

## Claims

1. An electrode assembly, comprising:
a cathode electrode plate, an anode electrode plate, and a separator, the separator being configured to isolate the cathode electrode plate from the anode electrode plate; and
an electrolyte adsorption layer configured to be arranged along a surface of at least one of the cathode electrode plate, the anode electrode plate and the separator, wherein the electrolyte adsorption layer is provided with ion exchange channels, which are through holes provided in a thickness direction of the electrolyte adsorption layer.

2. The electrode assembly according to claim 1, wherein the electrolyte adsorption layer is attached to one surface or two surfaces of the cathode electrode plate, and/or
the electrolyte adsorption layer is attached to one surface or two surfaces of the anode electrode plate, and/or
the electrolyte adsorption layer is attached to one surface or two surfaces of the separator.

3. The electrode assembly according to claim 2, wherein the cathode electrode plate, the separator, and the anode electrode plate are wound to form a bent region in which at least a part of the electrolyte adsorption layer is arranged on a surface of at least one of the cathode electrode plate, the anode electrode plate and the separator.

4. The electrode assembly according to claim 3, wherein at least a part of the electrolyte adsorption layer is arranged on a first bent portion and/or a second bent portion of the cathode electrode plate in the bent region, and/or at least a part of the electrolyte adsorption layer is arranged on a first bent portion and/or a second bent portion of the anode electrode plate, and/or at least a part of the electrolyte adsorption layer is arranged on a bent portion of the separator adjacent to the first bent portion of the cathode electrode plate and/or a bent portion of the separator adjacent to the second bent portion of the cathode electrode plate, and/or at least a part of the electrolyte adsorption layer is arranged on a bent portion of the separator adjacent to the first bent portion of the anode electrode plate and/or a bent portion of the separator adjacent to the second bent portion of the anode electrode plate.

5. The electrode assembly according to claim 4, wherein the bent region comprises a first bent subregion covering a midline of the bent region and a second bent subregion located on at least one side of the first bent subregion, and the midline of the bent region is parallel to a winding axis of the electrode assembly; and wherein
a part of the electrolyte adsorption layer in the first bent subregion has a porosity different from that of a part of the electrolyte adsorption layer in the second bent subregion, wherein the porosity of the electrolyte adsorption layer is a ratio of an area of the ion exchange channels to an area of the electrolyte adsorption layer.

6. The electrode assembly according to claim 4, wherein in the bent region, and in a direction parallel to the winding axis of the electrode assembly, the ion exchange channels are distributed along a broken line or a curve in the electrolyte adsorption layer.

7. The electrode assembly according to any one of claims 1 to 6, wherein the electrolyte adsorption layer comprises an adsorption substrate provided with the ion exchange channels.

8. The electrode assembly according to claim 7, wherein the adsorption substrate is of a material including one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A epoxy resin, ethylene-vinyl acetate copolymer bisphenol F epoxy resin, glycidyl ether type epoxy resin, glycidyl ester type epoxy resin, silicone resin, polyurethane, a styrene-isoprene-styrene copolymer, and modifications thereof.

9. The electrode assembly according to any one of claims 1 to 6, wherein the electrolyte adsorption layer comprises an adsorption substrate and a supporting layer, wherein one side of the adsorption substrate is attached to the corresponding cathode electrode plate, anode electrode plate or separator, the supporting layer is attached to the other side of the adsorption substrate, and the ion exchange channels penetrate the supporting layer and the adsorption substrate in the thickness direction.

10. The electrode assembly according to claim 9, wherein the adsorption substrate is of a material including one of an acrylic acid-acrylate copolymer, a butadiene-styrene copolymer, a styrene-acrylic acid copolymer, a styrene-acrylate copolymer, an ethylene-vinyl acetate copolymer, acrylic acid grafted polyethylene, maleic anhydride grafted polyethylene, acrylic acid grafted polypropylene, maleic anhydride grafted polypropylene, polyvinylidene fluoride, carboxymethyl cellulose, polyimide, polyetherimide, polyethylene terephthalate, styrene-isoprene-styrene copolymer rubber, ethylene-vinyl acetate copolymer bisphenol A epoxy resin, ethylene-vinyl acetate copolymer bisphenol F epoxy resin, glycidyl ether type epoxy resin, glycidyl ester type epoxy resin, silicone resin, polyurethane, a styrene-isoprene-styrene copolymer, and modifications thereof.

11. The electrode assembly according to claim 9 or 10, wherein the supporting layer is of a material including one of polyvinyl chloride, polyethylene, polypropylene, polyvinylidene fluoride, a hexafluoropropylene-vinylidene fluoride copolymer, a tetrafluoropropylene-vinylidene fluoride copolymer, a chlorotrifluoropropylene-vinylidene fluoride copolymer, polyethylene glycol terephthalate, polyimide, polyetherimide, polycarbonate, polystyrene, polyphenylene sulfide, polyvinylidene fluoride or a copolymer of the polyvinylidene fluoride, polyarylate, a fiber, nylon, a nonwoven, and modifications thereof.

12. The electrode assembly according to any one of claims 9 to 11, wherein the supporting layer has a thickness of ≤ 50 um, 0 < a porosity of the supporting layer ≤ 50%, and/or the supporting layer has a tensile modulus of ≤ 100 MPa, wherein the porosity of the supporting layer is a ratio of a total area of the ion exchange channels to an area of the supporting layer.

13. A battery cell, comprising: a housing, an electrolyte, a cover plate, and at least one electrode assembly of any one of claims 1 to 12, wherein
the housing has an accommodating cavity and an opening, and the electrode assembly and the electrolyte are accommodated in the accommodating cavity; and
the cover plate is configured to close the opening of the housing.

14. A battery, comprising a case and at least one battery cell of claim 13, wherein the battery cell is received in the case.

15. A power consuming device configured to receive power provided by a battery of claim 14.
